(19) **Europäisches Patentamt**
European Patent Office
Office européen des brevets

(11) **EP 2 214 944 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(21) Anmeldenummer: **08842914.7**

(22) Anmeldetag: **23.10.2008**

(51) Int Cl.:
**B60T 13/74** *(2006.01)* **B60T 17/22** *(2006.01)*

(86) Internationale Anmeldenummer:
**PCT/EP2008/064358**

(87) Internationale Veröffentlichungsnummer:
**WO 2009/053430 (30.04.2009 Gazette 2009/18)**

(54) **FESTSTELLBREMSE UND VERFAHREN ZUM BETREIBEN DERSELBEN**

PARKING BRAKE AND METHOD FOR OPERATING THE SAME

FREIN DE STATIONNEMENT ET PROCÉDÉ DE FONCTIONNEMENT

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.10.2007 DE 102007051078**
**23.10.2008 DE 102008052847**

(43) Veröffentlichungstag der Anmeldung:
**11.08.2010 Patentblatt 2010/32**

(73) Patentinhaber: **Continental Teves AG & Co. oHG 60488 Frankfurt (DE)**

(72) Erfinder:
• **MARON, Christof**
**65779 Kelkheim (DE)**
• **SCHUMANN, Marcus**
**55246 Mainz-Kostheim (DE)**
• **ATTALLAH, Faouzi**
**64283 Darmstadt (DE)**
• **SCHNEIDER, Heinz-Anton**
**65527 Niedernhausen (DE)**

(56) Entgegenhaltungen:
**EP-B- 0 478 642       DE-A1- 10 261 969**
**DE-B3- 10 361 042    DE-B4- 10 228 115**
**DE-C2- 19 732 168**

EP 2 214 944 B1

**Beschreibung**

Die vorliegende Erfindung betrifft eine Feststellbremse mit einem Aktuator, wobei der Aktuator durch einen in zwei Richtungen betreibbaren Gleichstrommotor angetrieben wird, der über ein selbsthemmendes Getriebe des Aktuators mindestens eine Bremsbacke zum Zuspannen oder Lösen der Feststellbremse in Richtung eines Drehglieds oder davon weg bewegt, wobei eine Steuereinheit für die Steuerung oder Regelung der Bewegung des Gleichstrommotors vorgesehen ist, wobei die Feststellbremse derart ausgebildet ist, dass beim Zuspannen oder Lösen der Feststellbremse in der Regel ein Anlegepunkt der Bremsbacken an dem Drehglied überschritten wird, sowie ein Verfahren zum Betreiben einer derartigen Feststellbremse.

Eine elektrisch betätigbare Feststellbremse ist beispielsweise aus DE 102 61 969 A1 oder aus EP 0478642B bekannt. Diese weist einen Elektromotor auf, der durch eine elektronische Steuereinheit (ECU) anzusteuern ist. Die Fahrzeugbremse hat einen Bremskolben, der auf wenigstens einen Reibbelag wirkt und aus einer Ruhestellung in eine Betätigungsstellung verschiebbar ist, in der der Bremskolben den Reibbelag gegen ein mit dem Rad des Kraftfahrzeugs drehfest verbindbares Drehglied der Fahrzeugbremse anlegt. Der Bremskolben ist mittels eines auf den Bremskolben wirkenden Elements einer von dem Elektromotor angetriebenen Getriebeeinheit betätigbar. Der Bremskolben kann derart verschoben werden, dass die Reibbeläge gerade an dem als Bremsscheibe ausgestalteten Drehglied anliegen. Aus der Anzahl der Motorschritte bis in diese Stellung kann nach einem Vergleich mit einem Referenzwert der Verschleiß der Bremsbeläge ermittelt werden. Wenn ein kritischer Verschleiß der Bremsbeläge erreicht ist, wird der Fahrzeugführer gewarnt. Zudem fließt der gemessene Verschleiß der Bremsbeläge in den Verschiebeweg des auf den Bremskolben wirkenden Elements in die Ruhestellung ein.

Eine elektrische Park- oder Feststellbremse in Form einer Scheiben- oder Trommelbremse hat die grundlegende Aufgabe, ein Kraftfahrzeug mittels elektrisch angetriebener Reibungsbremsen gemäß den gesetzlichen und/oder den kundenspezifischen Anforderungen sicher festzustellen. Der Fahrer eines Kraftfahrzeugs mit einer solchen elektrischen Feststellbremse muss sich dabei auf die funktionale Zuverlässigkeit dieses "brake by wire"-Bremssystems verlassen können.

Eine zentrale Kundenanforderung schreibt vor, bei jedem Zuspannen mindestens eine vordefinierte Spannkraft (z.B. 18,5 kN) einzustellen, unabhängig von den Umwelteinflüssen oder sonstigen Randbedingungen. Diese Forderung berücksichtigt bereits alle fahrzeug- und herstellerspezifischen Aktuatoren, insbesondere die maximal zu erwartende Steigung, den Bremsschreibendurchmesser, die Reibwerte der Beläge usw. Es muss außerdem sichergestellt werden, dass beim Lösen der elektrischen Feststellbremse ein ausreichend großes Lüftspiel eingestellt wird, so dass es im weiteren Betrieb des Kraftfahrzeugs nicht zu einer Überhitzung der Bremse kommt.

Ein Grundproblem heutiger Steuerungen/Regelungen von Feststellbremsen besteht darin, dass die Zuspannkraft nicht, wie in der Druckschrift DE 102 28 115 B4 beschrieben, direkt gemessen wird, sondern aus Kostengründen aus anderen Parametern indirekt bestimmt wird.

Um eine genaue und sichere Einstellung der erforderlichen Zuspannkraft und des Lüftspiels zu erreichen, ist es erforderlich, die Position des Kolbens bzw. der Bremsbacken genau zu kennen. Wie unten genauer erläutert wird, erfolgt die Positionsbestimmung häufig mittels eines Motormodells, dessen Konstanten nicht exakt bekannt sind und das Näherungen beinhaltet, so dass bei der Positionsbestimmung, die diese Fehler aufintegriert, Fehler entstehen, die die Genauigkeit und Zuverlässigkeit Einstellung der Feststellbremse negativ beeinflussen können.

Ein. Fixpunkt bei der Bewegung des Aktuators ist der sogenannte Anlegepunkt, d.h. der Punkt, bei dem die Bremsbeläge gerade an der Bremsscheibe anliegen. Dieser Punkt wird in der Regel beim Zuspannen und Lösen der Feststellbremse überschritten. Dieser Punkt kann daher für eine Positionsbestimmung genutzt werden, da sich ausgehend von diesem Punkt sowohl das erforderliche Lüftspiel als auch die gewünschte Zuspannkraft definiert einstellen lassen. Die oben beschriebenen Verfahren nach dem Stand der Technik eignen sich nicht für eine genaue Bestimmung des Anlegepunkts bzw. sind bei fehlender Kraftmessung im System der Feststellbremse nicht einsetzbar.

Es besteht somit die Aufgabe, eine Feststellbremse zu schaffen sowie ein Verfahren zum Betreiben einer derartigen Feststellbremse anzugeben, durch die eine genauere Einstellung der gewünschten Zuspannkraft beim Zuspannen bzw. eine genauere Einstellung des Lüftspiels beim Lösen der Feststellbremse ermöglicht wird.

Die vorliegende Aufgabe wird durch ein Verfahren gelöst, bei dem durch die Steuereinheit zur Bestimmung des Anlegepunkts die erste Ableitung des beim Zuspannen vom Gleichstrommotor aufgenommenen elektrischen Stroms nach der Zeit gebildet wird.

Das erfindungsgemäße Verfahren geht davon aus, dass im Anlegepunkt die Ableitung der Zuspannkraft nach dem Zuspannweg größer als Null wird. Ferner wird berücksichtigt, dass die Zeitableitung der Kraft über die Motordrehzahl mit der Ableitung nach dem Weg verknüpft ist. Es wird außerdem die Erkenntnis genutzt, dass die Kraft näherungsweise proportional zu dem vom Gleichstrommotor aufgenommenen Strom ist. Hieraus ergibt sich, dass die Betrachtung der erfindungsgemäßen Ableitung eine Aussage über den Anlegepunkt zulässt. Insbesondere kann aus obigen Annahmen und Vereinfachungen geschlussfolgert werden, dass der Anlegepunkt als der Punkt der Bremsbackenstellung bestimmt werden kann, bei dem die Ableitung des vom Gleichstrommotor aufgenommenen elektrischen Stroms nach der Zeit größer als Null wird. Vorzugsweise wird dieser Wert der ersten Ableitung erst dann als Anlegepunkt identifiziert, wenn die Ableitung des Stroms davor negativ war. Diese Bedingung ermöglicht eine Abgrenzung des betrachteten Stromverlaufs in der Nähe des Anlegepunkts vom Stromverlauf bei Anlauf der Bewegung des Gleichstrommotors.

Ein sicheres und robustes Erkennen des Anlegepunkts durch die Steuereinheit kann mit einem bevorzugten Verfahren erfolgen, das auch bei ungewöhnlichen Stromprofilen angewendet werden kann und die folgenden Schritte aufweist:

- Festlegen eines positiven Ableitungsschwellwerts für die erste Ableitung,

- Prüfen in vorgegebenen, vorzugsweise regelmäßigen Abständen der Zuspannbewegung des Gleichstrommotors, ob die erste Ableitung des vom Gleichstrommotor auf- genommenen Stroms größer als der oder gleich dem Ableitungsschwellwert ist,

- falls die erste Ableitung größer als der oder gleich dem Ableitungsschwellwert ist, Merken der aktuellen Bremsbakkenposition als potentiellen Anlegepunkt und Starten eines Zählers sowie Inkrementieren des Zäh- lers bei der weiteren Zuspannbewegung des Gleich- strommotors um einen vorher festgelegten Inkremen- tierungswert, solange die erste Ableitung größer als der oder gleich dem Ableitungsschwellwert ist, oder Zurücksetzen des Zählers auf Null, sobald bei der weiteren Zuspannbewegung des Gleichstrommotors die erste Ableitung den Ableitungsschwellwert wieder un- terschreitet,

- Prüfen, ob der Zähler einen vordefinierten Zähler- schwellwert überschreitet, und,

- falls der Zähler den vordefinierten Zählerschwell- wert überschreitet, Festlegen des jeweiligen gemerk- ten potentiellen Anlegepunkts als tatsächlicher An- legepunkt für das jeweilige Zuspannen der Feststell- bremse.

In einem bevorzugten Ausführungsbeispiel wird durch die Steuereinheit zur Steuerung oder Regelung der Bewegung des Gleichstrommotors zum Zuspannen der Feststellbremse mit einer gewünschten, vorgegebenen Zuspannkraft ein vom Gleichstrommotor aufgenommener Maximalstromwert bestimmt, das Zuspannen durch eine entsprechende Bewegung des Gleichstrommotors durchgeführt und nach Erreichen des Maximalstromwerts die zum Zuspannen der Feststellbremse führende Bewegung des Gleichstrommotors beendet.

Von Vorteil ist außerdem, wenn bei Steuerung oder Regelung der Bewegung des Gleichstrommotors zum Zuspannen und/oder Lösen der Feststellbremse durch die Steuereinheit ein hydraulischer Vordruck, welcher im Fall des Zuspannens aktuell am Kolben anliegt oder im Fall des Lösens beim vorangegangenen Zuspannen am Kolben angelegen hat, berücksichtigt wird.

Dieses erfindungsgemäße Verfahren ist deshalb vorteilhaft, da der im System herrschende hydraulische Vordruck sich additiv mit der eingestellten Zuspannkraft überlagert, so dass die Summe der Kräfte aus dem hydraulischen Vordruck und der eingestellten Zuspannkraft eine resultierende Zuspannkraft ergibt, die zu einem höheren Verschleiß der mechanischen Komponenten führt als die eingestellte Zuspannkraft. Hinsichtlich des Lösens ist der hydraulische Vordruck insbesondere bei der Anlegepunkterkennung zu beachten. Demzufolge lässt sich die Genauigkeit der Einstellung der Zuspannkraft bzw. des Lüftspiels weiter dadurch erhöhen, dass erfindungsgemäß der im System anliegende hydraulische Vordruck beim Zuspannen oder Lösen der Feststellbremse berücksichtigt wird.

Es ist ebenfalls bevorzugt, dass durch die Steuereinheit beim Zuspannen und/oder Lösen mittels eines Motormodells fortlaufend ein zurückgelegter Betätigungsweg des Gleichstrommotors ermittelt wird. Hierbei entspricht der Betätigungsweg des Gleichstrommotors auch dem Weg, den die Mutter auf der Spindel, die durch den Motor angetrieben wird, oder der Kolben zurücklegt. Aufgrund dieser vorteilhaften Vorgehensweise ist es, wie im Folgenden beschrieben wird, sehr einfach, die Berücksichtigung des hydraulischen Vordrucks beispielsweise bei der Kalibrierung der Kolbenposition auf den Anlegepunkt durchzuführen.

In einem bevorzugten Ausführungsbeispiel wird durch die Steuereinheit zunächst der während des Zuspannens überschrittene Anlegepunkt oder die Position beim Erreichen des Maximalstromwerts ermittelt und eine mittels eines Motormodells ermittelte Kolbenposition unter Berücksichtigung des hydraulischen Vordrucks auf den ermittelten Anlegepunkt oder die ermittelte Position beim Erreichen des vorgegebenen Maximalstromwerts kalibriert. Hierbei ist die Kalibrierung auf den Anlegepunkt bevorzugt, wobei auf die Position beim Erreichen des Maximalstroms beispielsweise dann kalibriert wird, wenn der Anlegepunkt nicht ermittelt werden konnte.

Wie oben bereits dargestellt wurde, muss bei der realisierten Zuspannkraft auch der an dem Kolben anliegende hydraulische Vordruck berücksichtigt werden, der sich mit der eingestellten Zuspannkraft überlagert. Mit Hilfe des hydraulischen Vordrucks lässt sich, wie unten gezeigt wird, die nur mit Hilfe eines Motormodells (Beispiel siehe unten) ermittelte Kolbenposition auf den Anlegepunkt oder auf den Punkt am Ende des Zuspannvorgangs kalibrieren. Dies ist eine besonders einfache Möglichkeit der Positionskalibrierung, die eine genaue Steuerung oder Regelung der Aktuatorbewegung beim Zuspannen oder Lösen ermöglicht.

In einem weiteren bevorzugten Ausführungsbeispiel wird durch die Steuereinheit aus dem Betätigungsweg zwischen dem ermittelten Anlegepunkt und der Betätigungsposition beim Erreichen des vorgegebenen Maximalstromwerts ein zurückgelegter Zuspannweg ermittelt und anschließend der zurückgelegte Zuspannweg mit einem der gewünschten Zuspannkraft entsprechenden Normzuspannweg verglichen, wobei bei einer signifikanten Abweichung des zurückgelegen Zuspannwegs vom Normzuspannweg, nämlich dann, wenn der zurückgelegte Zuspannweg deutlich kleiner als der Normzuspannweg ist, eine Nachspannfunktion der Steuereinheit aktiviert wird. Beispielsweise kann bei einer Abweichung des zurückgelegten Zuspannwegs vom Normzuspannweg von mehr als 50%, d.h., wenn der zurückgelegte Zuspannweg deutlich kleiner als 50% des Normzuspannwegs ist, ein Nachspannen ausgelöst werden.

Dieses Ausführungsbeispiel geht davon aus, dass auch nach dem Erreichen des Abschalt-/Maximalstromwerts und dem Beenden des Zuspannvorgangs keine Information über die tatsächlich erreichte Zuspannkraft verfügbar ist. Unter der Vorraussetzung, dass der Anlegepunkt, d.h. der Punkt, bei dem die Bremsbeläge gerade an der Bremsscheibe anliegen, bekannt ist, kann mit Hilfe des Vergleichs des vom Anlegepunkt bis zum Erreichen des Maximalstromwerts zurückgelegten Wegs (zurückgelegter Zuspannweg) und des anhand einer Normsattelkennlinie ermittelten Normzuspannwegs geprüft werden, ob die erforderliche Zuspannkraft aller Wahrscheinlichkeit nach auch wirklich eingestellt wurde. Der Normzuspannweg ergibt sich dabei aus der Normsattelkennlinie der Feststellbremse für die gewünschte Zuspannkraft. Die Normsattelkennlinie ist hierbei der Zusammenhang zwischen Zuspannkraft und Verformung der Feststellbremsenelemente (bzw. Kolbenweg), der sich aus der Steifigkeit der Elemente ergibt.

In einem besonders bevorzugten Ausführungsbeispiel beinhaltet die Nachspannfunktion eine Wegregelung, wobei das Nachspannen vorzugsweise direkt nach Beendigung des Zuspannvorgangs durchgeführt wird. Dieses Vorgehen ist von Vorteil, da aus Versuchen bekannt ist, dass zum Wiederanlaufen des Aktuators ein deutlich höherer Strom benötigt wird als der Strom, der beim letzten Zuspannen verwendet wurde. Aus diesem Grund wird ein Nachspannkonzept realisiert, das ohne den beim oben beschriebenen Zuspannen definierten Abschaltoder Maximalstromwert auskommt.

In einem weiteren Ausführungsbeispiel wird durch das Steuergerät zum Nachspannen eine "Knock-Funktion" verwendet, wobei auch bei diesem Ausführungsbeispiel das Nachspannen vorzugsweise direkt nach Beendigung des Zuspannvorgangs durchgeführt wird. Die "Knock-Funktion" ist eine vorteilhafte Maßnahme beim Zuspannen, bei der vorzugsweise abhängig von der Aktuatortemperatur, der zur Verfügung stehenden Spannung und dem erreichten Abschaltstrom am Ende eines Zuspannvorgangs eine Anzahl von Drehmomentimpulsen auf den Aktuator gegeben wird, so dass sich eine höhere Zuspannkraft einstellt. Ein Beispiel für eine derartige "Knock-Funktion" wird unten erläutert.

In einem weiteren vorteilhaften Ausführungsbeispiel des erfindungsgemäßen Verfahrens wird durch die Steuereinheit zum Lösen der Feststellbremse eine Steuerung der Mutterbewegung in Löserichtung durchgeführt, wobei bei der Berechnung des für die Steuerung der Mutterbewegung verwendeten Sollverfahrwegs der beim letzten Zuspannen unter Berücksichtigung des hydraulischen Vordrucks ermittelte Anlegepunkt sowie ein vorgegebenes Lüftspiel berücksichtigt wird. Die Bestimmung des Sollverfahrwegs wird somit vereinfacht und ist durch die Verwendung des ermittelten Anlegepunkts auch vergleichsweise genau, da eine Integration von Fehlern so vermieden wird.

Die obige Aufgabe wird ferner durch eine Feststellbremse gelöst, bei der die Steuereinheit den Anlegepunkt durch Bildung der ersten Ableitung des beim Zuspannen vom Gleichstrommotor aufgenommenen elektrischen Stroms nach der Zeit bestimmt. Die erfindungsgemäße Feststellbremse weist die oben hinsichtlich des erfindungsgemäßen Verfahrens genannten Vorteile auf. Die bevorzugten Ausführungsbeispiele der erfindungsgemäßen Feststellbremse entsprechen den oben zu dem erfindungsgemäßen Verfahren erläuterten Ausführungsbeispielen.

Weitere Merkmale, Vorteile und Anwendungsmöglichkeiten der vorliegenden Erfindung ergeben sich auch aus der nachfolgenden Beschreibung von Ausführungsbeispielen einer erfindungsgemäßen Feststellbremse bzw. eines erfindungsgemäßen Verfahrens zum Betreiben einer solchen Feststellbremse anhand von Figuren. Dabei bilden alle beschriebenen und/oder bildlich dargestellten Merkmale für sich oder in beliebiger Kombination den Gegenstand der vorliegenden Erfindung, auch unabhängig von ihrer Zusammenfassung in den Ansprüchen oder deren Rückbezügen.

Es zeigen schematisch:

Fig. 1    einen ersten Teil der Komponenten einer erfin- dungsgemäßen Feststellbremse in Form einer Schaltskizze,

Fig. 2    einen zweiten Teil der Komponenten der erfin- dungsgemäßen Feststellbremse gemäß Fig. 1 in ei- ner perspektivischen Ansicht von der Seite,

Fig. 3    den Motor und die Getriebestufen der erfindungs- gemäßen Feststellbremse gemäß Fig. 1 in einer perspektivischen Ansicht von der Seite (teilweise Explosionsdarstellung),

Fig. 4    ein Kennfeld des beim Zuspannen zu realisierenden Maximalstromwerts (einzustellender Strom in A), um eine Zuspannkraft von 16 kN zu erhalten, in Abhängigkeit von der Umgebungstemperatur (in °C) und der Eingangsspannung des Gleichstrommotors (in V) ohne Berücksichtigung des hydraulischen Vordrucks,

Fig. 5    ein Diagramm, das die quadratische Abhängigkeit der Zuspannkraft $F_{caliper}$ von dem Kolbenweg $X_{piston}$ für $F_{caliper} \geq 0$ darstellt, und

Fig. 6    ein Diagramm, aus dem der Verlauf der Ableitung des Motorstroms $i$ nach der Zeit $t$ ($di/dt$) in Ab- hängigkeit von der Zeit $t$ beim Zuspannen zu ent- nehmen ist.

## 1. Beschreibung der erfindungsgemäßen Feststellbremse

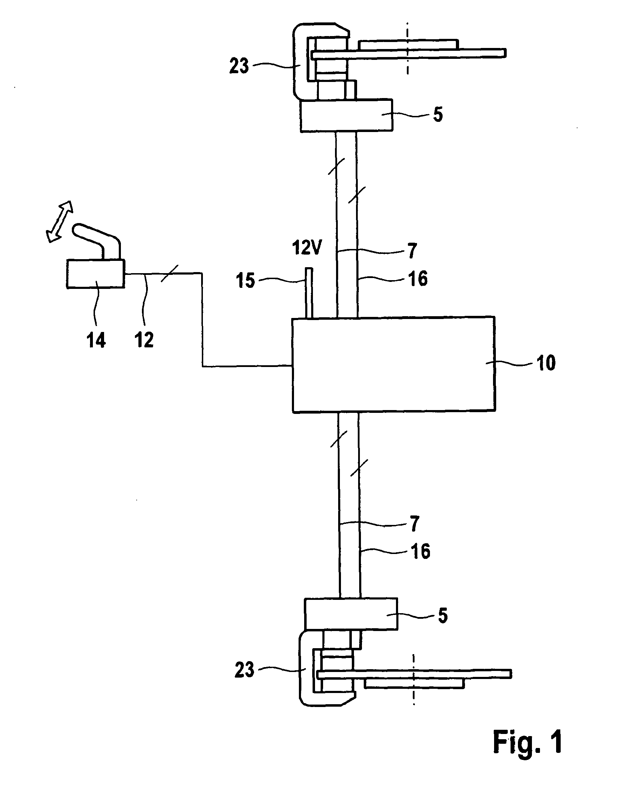

Die in Fig. 1 dargestellte erfindungsgemäße Feststellbremse für ein Kraftfahrzeug weist für jedes Rad einen Aktuator 5 auf, der jeweils über eine Steuer-/Regelleitung 7 mit einer Steuereinheit 10 verbunden ist. Fig. 1 zeigt ferner die Verbindung der Steuereinheit 10 über eine (ggf. mehrfache) Steuer-/Regelleitung 12 zum Betätigungsschalter 14 der Feststellbremse, mit dem das Zuspannen oder Lösen der Feststellbremse durch den Fahrer des Kraftfahrzeugs initiiert werden kann. Die Steuereinheit 10 weist eine Spannungsversorgung 15 auf und ist mit den Aktuatoren 5 auch jeweils mit einer Leitung 16 verbunden, welche die Temperatur des jeweiligen Aktuators 5 an die Steuereinheit 10 übermittelt.

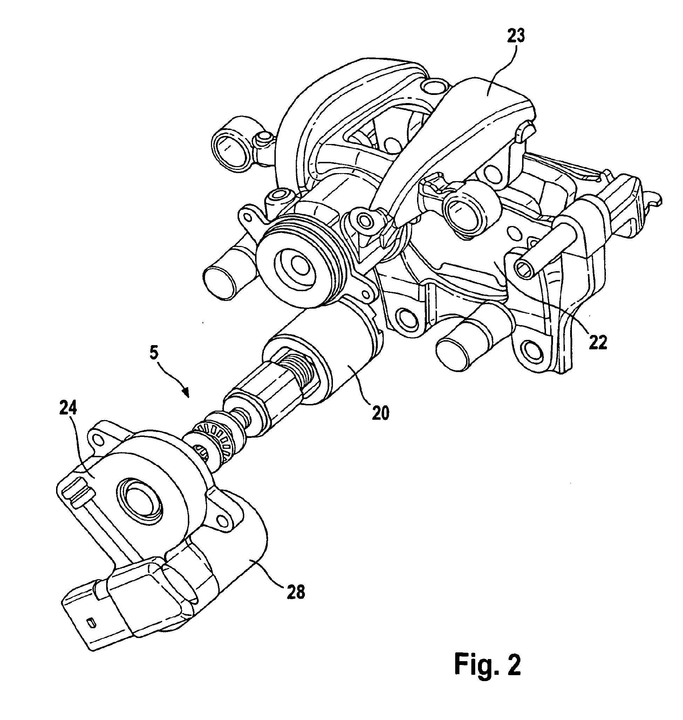

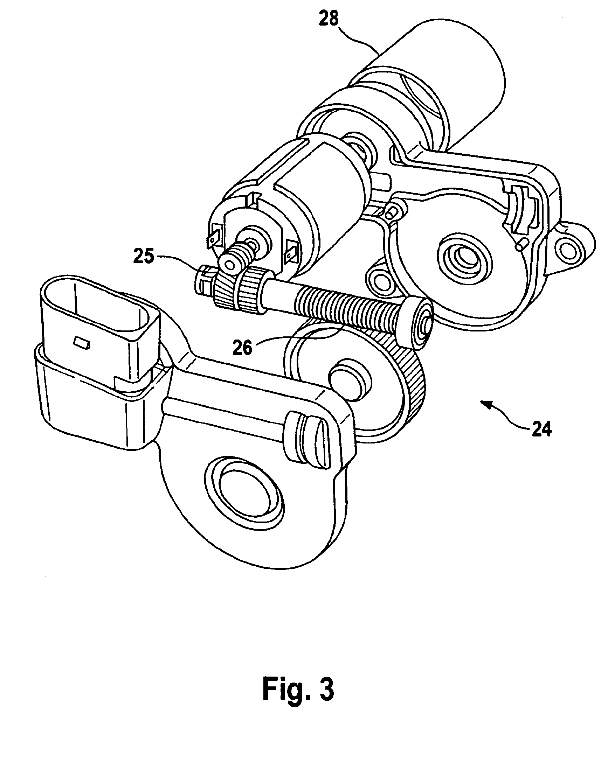

Den Fig. 2 und 3 ist zu entnehmen, dass jeder Aktuator 5 mit einer im hydraulisch betätigbaren Bremskolben 20 liegenden Spindel versehen ist, auf der sich die verdrehgesicherte Mutter mit der Drehbewegung der Spindel in axialer Richtung bewegt und bei Kontakt mit dem Bremskolben beim Zuspannen eine Spannkraft auf die Bremsbeläge 22 und die nicht dargestellte Bremsscheibe aufbringt. Die Steifigkeit des Systems wird u.A. durch den Bremssattel 23 erzeugt.

Die Spindel wird über ein doppelstufiges Schneckengetriebe 24 mit einer ersten Getriebestufe 25 und einer zweiten Getriebestufe 26 von einem bürstenbehafteten, in zwei Richtungen betreibbaren Gleichstrommotor 28 angetrieben. Die erzeugte Spannkraft wird durch das Axiallager abgestützt. Durch die zweite Stufe 26 des Schneckengetriebes wird die für die Parkbrems-/Feststellbremsfunktion erforderliche Selbsthemmung realisiert. Die Selbsthemmung beinhaltet, dass eine einmal vom Gleichstrommotor 28 aufgebrachte Spannkraft auch ohne Strom aufrecht erhalten wird.

Zur Einstellung der erforderlichen Zuspannkraft wird der Motorstrom gemessen und die an den Motor angelegte Spannung über die Steuereinheit 10, die mit einer nicht dargestellten H-Brücke verbunden ist, in die erforderliche Richtung festgelegt. Die Zuspannkraft selbst wird aus Kostengründen nicht gemessen. Gleiches gilt auch für die Motorposition bzw. die Drehzahl des Motors 28.

Optional kann mit Hilfe eines umgebauten Raddrehzahlsensors die Drehbewegung des Motors gemessen werden. Dies erfolgt über die Generierung von Drehzahlimpulsen, die der Sensor erfasst. Allerdings ist keine Drehrichtungserkennung vorgesehen, vielmehr muss die Motorbewegungserfassung aufgrund der Ansteuerung des Motors die Drehrichtung selbständig ermitteln. Da hierdurch nicht alle Fälle berücksichtigt werden können, z.B. wenn der Motor sich in negativer Richtung bewegt, obwohl eine positive Spannung anliegt und ein positiver Strom fließt, ist die Positionserfassung auch in diesem Ausführungsbeispiel nicht fehlerfrei möglich.

Bei den im folgenden erläuterten Ausführungsbeispielen des erfindungsgemäßen Verfahrens werden für die nachfolgend aufgeführten Elemente und physikalischen Größen der Feststellbremse die folgenden Symbole verwendet:

**Motor 28**

| | |
|---|---|
| Motorkonstante: | $k_t$ |
| Motorwicklungswiderstand (inkl. Zuleitung): | $R_{mot}$ |
| Motorinduktivität (inkl. Zuleitung): | $L_{mot}$ |
| Temperaturabhängigkeit Motorkonstante: | $c_{kt}$ |
| Massenträgheitsmomente (geschätzt): | $\theta$ |
| Norminalstrom: | $i_{nom}$ |
| Nominalspannung: | $u_{nom}$ |
| Nominaldrehzahl: | $n_{nom}$ |
| Nominaldrehmoment: | $M_{nom}$ |

**Getriebe 24**

| | |
|---|---|
| Übersetzung erste Stufe 25: | $ü_1$ |
| Übersetzung zweite Stufe 26: | $ü_2$ |
| Steigung/Wirkungsgrad: | $p$ |

**Aktuator 5**

| Gesamtgetriebeübersetzung | $\ddot{u}$ |
|---|---|
| Gesamtwirkungsgrad | $\eta$ |
| Konstantreibungsmoment | $M_{R0}$ |

**Stattelsteifigkeit** $c$

**Kolben**

| Wirksamer Durchmesser: | $d$ |
|---|---|
| Wirksame Fläche: | $A_{eff}$ |

Kernstück der Aktuatoransteuerung der Steuereinheit 10 ist ein Wegregler, der folgende Funktionen erfüllt:

- Position im Rahmen der Möglichkeiten einregeln,
- Abschalten beim Erreichen der vorgegebenen Strombegrenzung (Maximalstromwert), und
- Abschalten beim Erreichen eines stationären Zustands.

Der Wegregler gibt in einem Ausführungsbeispiel der Erfindung folgende Größen für die Ansteuerung der mit dem Gleichstrommotor 28 verbundenen H-Brücke vor:

- Pulsweitenmodulation (-1 = Löserichtung, 0 = Bremsbetrieb, +1 = Zuspannrichtung)
- H-Brücken-Enable.

In einem bevorzugten Ausführungsbeispiel ist der Wegregler der Steuereinheit 10 derart gestaltet, dass er nur die Spannung ein- bzw. ausschalten kann, die Einstellung von Spannungszwischenwerten ist nicht möglich. Es liegt deshalb ein so genannter Dreipunkt-Regler vor. Das Einregeln der gewünschten Position des Kolbens bzw. der Bremsbacken geschieht dadurch, dass beim Überfahren der gewünschten Position in den Bremsbetrieb geschaltet wird. Die sich dann ergebende Regeldifferenz kann toleriert werden. Diese Form der echten Dreipunkt-Regelung wird beim Lösen und beim Nachspannen der Feststellbremse verwendet.

Weiterhin muss der Regler auch beim Erreichen der Stellgrößenbegrenzung (d.h. bei Erreichen des Maximal- bzw. Minimalstromwerts) abschalten. Hierfür wird der Strom auf die Überschreitung der vorab bestimmten Stromgrenzen überwacht. Es ist allerdings sicherzustellen, dass der hohe Anlaufstrom des Gleichstrommotors 28 hinsichtlich der Abschaltbedingung ignoriert wird, da er grundsätzlich über den vorgegebenen Maximalgrenzen liegt. Hierfür wird die Überwachung hinsichtlich des Erreichens der Stromgrenzen erst nach Ablauf einer vorgegebenen Zeit, (z.B. 50 bis 150 ms) nach dem Einschalten des Wegreglers gestartet. Das Abschalten beim Erreichen des vorgegebenen Maximalstromwerts wird beim Zuspannen dadurch erreicht, dass als Positionssollwert ein vom Aktuator 5 nicht zu erreichender Sollwert vorgegeben wird.

Der Wegregler der Steuereinheit 10 muss ferner beim Erreichen eines stationären Zustands (Bewegungsstillstand) abgeschaltet werden. Hier wird das Regelungsziel bzw. die Stellgrößenbeschränkung nicht erreicht. Diese Situation entsteht beim Zuspannen beispielsweise immer dann, wenn die zur Verfügung stehende Spannung nicht für das Erreichen des vorgegebenen Maximalstromwerts ausreicht. Insbesondere ist hierbei die Erkennung des Stillstands kritisch, da das Vorliegen einer Bewegung nur geschätzt und nicht überwacht wird. Es kann daher zu Situationen kommen, in denen ein Stillstand des Aktuators 5 nicht erkannt wird. Um einen solchen Fall zu vermeiden, kann als Abschaltkriterium beispielsweise die Verlustleistung verwendet werden. Diese kann, da sie nicht direkt gemessen wird, z.B. aus dem für den jeweiligen Vorgang aufgewendeten Quadrat des Stroms ermittelt werden. Alternativ ist die Überwachung des einfachen Stromintegrals (Integral des Strombetrags) möglich, die den Vorteil bietet, dass auch lange, mit kleinen Strömen arbeitende Vorgänge erkannt und abgeschaltet werden können.

## 2. Beschreibung des Motormodells

Für die nachfolgenden Betrachtungen wird davon ausgegangen, dass die Bewegung des Gleichstrommotors mittels des bekannten Modells "Gleichstrommaschine" beschrieben werden kann. Dabei ergibt sich die Besonderheit, dass das mittels der Software zu realisierende Motormodell mit abgetasteten Werten arbeitet und zeitdiskret ist. Bei in dem Ausführungsbeispiel verwendeten Abtastzeiten von $T_0 = 10$ ms wird der Strom nicht mehr schnell genug abgetastet, um dem Einfluss der Induktivität des Motors auf das Verhalten zu erfassen. Aus diesem Grund wird die Induktivität im zeitdiskreten Motormodell ignoriert. Das Motormodell vereinfacht sich demnach auf die folgende Darstellung:

$$u(k \cdot T_0) = R_{mot} \cdot i(k \cdot T_0) + \omega(k \cdot T_0) \cdot k_t \qquad \text{(Gl. 1),}$$

wobei $u$ ... die Spannung, $\omega$ ... die Drehzahl des Gleichstrommotors sind und $k \cdot T_0$ den aktuellen Abtastwert angeben.

Aus dieser Gleichung kann durch einfaches Umformen sowohl die aktuelle Motordrehzahl als auch fortlaufend die Motorposition (Betätigungsposition) bzw. der Betätigungsweg durch Integration der Drehzahl ermittelt werden:

$$\omega(k \cdot T_0) = \frac{u(k \cdot T_0) - R_{mot} \cdot i(k \cdot T_0)}{k_t}$$

$$\text{(Gl. 1a und 1b)}$$

$$\varphi(k \cdot T_0) = \varphi((k-1) \cdot T_0) + \omega(k \cdot T_0) \cdot T_0$$

### 3. Funktionsweise der erfindungsgemäßen Feststellbremse

Beim Zuspannen der erfindungsgemäßen Feststellbremse wird der Motor in Richtung Zuspannen, das heißt beispielsweise mit einer positiven anliegenden Spannung, über die H-Brücke angetrieben. Nach dem Anlaufen des Motors sinkt der Strom schnell auf einen Minimalwert, den sogenannten Leerlaufstrom, während sich die Maximaldrehzahl einstellt. Nachdem die Beläge zur Anlage an der Bremsschreibe gekommen sind, d.h. nach Überwindung des Lüftspiels, baut sich eine Kraft auf und der Strom steigt an. Nun wird der Aktuator so lange durch den Gleichstrommotor angetrieben, bis sich ein Maximalstromwert einstellt bzw. dieser überschritten wird. Dann ist die dem entsprechenden Strom zugeordnete Zuspannkraft erreicht.

Beim Lösen der Feststellbremse wird der Gleichstrommotor in die entgegen gesetzte Richtung, beispielsweise durch Anlegen einer negativen Spannung, betrieben. Wie unten erläutert wird, führt die Steuereinheit beim Lösen der Feststellbremse eine Steuerung durch, um den Löseweg einzustellen.

### 4. Zuspannen der erfindungsgemäßen Feststellbremse

Für das beschriebene Vorgehen beim Zuspannen ist es notwendig, den Maximalstromwert für die gewünschte Zuspannkraft vorab zu ermitteln. Dieser Stromwert hängt unter anderem von der Temperatur und der zur Verfügung stehenden Spannung ab. Die Temperatur beeinflusst den Motorwiderstand, die Motorkonstante und die Eigenschaften der Schmierung und damit den Wirkungsgrad. Der Motorwiderstand nimmt mit zunehmender Temperatur zu, die Motorkonstante hingegen ab. Die Eigenschaften des Schmiermittels (Fett) werden mit abnehmender Temperatur schlechter, da es zu einer Verdickung kommt. Bei sehr hohen Temperaturen wird das Fett hingegen zu flüssig, so dass sich seine Eigenschaften auch verschlechtern. Dafür sind die Eigenschaften des Fetts über den für die Feststellbremse relevanten Temperaturbereich im Wesentlichen konstant.

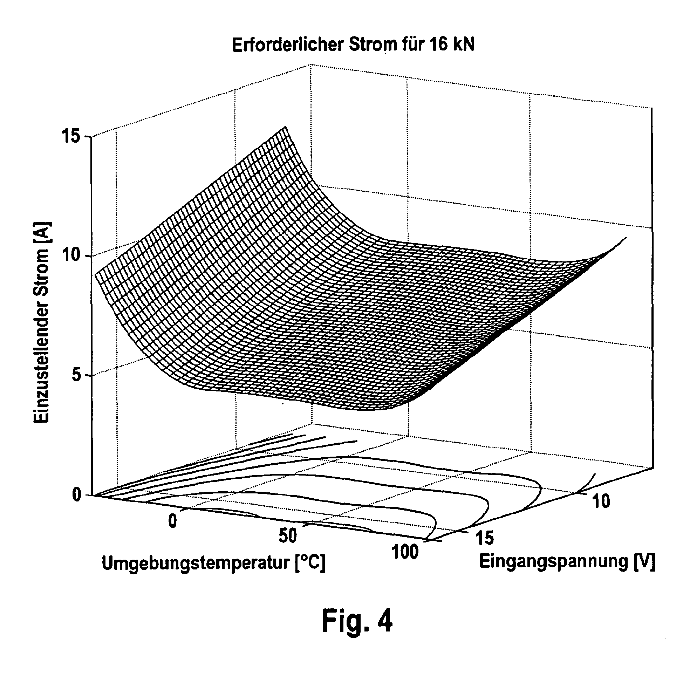

Am einfachsten kann ein Maximalstromwert dadurch ermittelt werden, dass die Aktuatoreigenschaften experimentell vermessen werden und die entsprechenden Maximalstromwerte in einem Kennfeld gespeichert werden. Ein derartiges Kennfeld ist in Fig. 4 dargestellt. Es zeigt den erforderlichen Maximalstromwert für eine Zuspannkraft von 16 kN in Abhängigkeit von der Umgebungstemperatur und der Eingangsspannung des Motors. Das messtechnisch erfasste Kennfeld wurde jedoch ohne die Berücksichtigung des hydraulischen Vordrucks aufgenommen.

In einem ersten Ausführungsbeispiel der Erfindung wird für bestimmte hydraulische Vordrücke, die am Kolben des Aktuators anliegen, jeweils ein in Fig. 4 gezeigtes Kennfeld ermittelt und die so erzeugten Kennfelder für die Ermittlung des Maximalstromwerts abhängig vom hydraulischen Vordruck sowie Umgebungstemperatur und Eingangsspannung in der Steuereinheit der erfindungsgemäßen Feststellbremse zur Verfügung gestellt. Für hydraulische Vordrücke, die zwischen den Werten liegen, für die Kennfelder existieren, kann der entsprechende Wert für den Maximalstrom interpoliert werden. Um nicht für jeden neuen Baustand des Aktuators Kennfelder unter Berücksichtigung des hydraulischen Vordrucks neu aufnehmen zu müssen, was zeitaufwendig ist, wird im Folgenden ein Verfahren dargestellt, mit dem der Abschalt/Maximalstromwert algorithmisch bestimmt werden kann.

Die gewünschte Zuspannkraft $F_{epb}$ in Abhängigkeit von dem Maximalstromwert $i_{max}$ ergibt sich bei konstant angenommenen Wirkungsgraden im Wesentlichen aus dem folgenden Zusammenhang zwischen erreichter Zuspannkraft und sich einstellendem Strom am Ende der Bewegung:

$$F_{epb} = \frac{(i_{max} \cdot k_t - M_{R0}) \cdot \eta \cdot ü \cdot 2 \cdot \pi}{p} \quad (\text{Gl. 2}).$$

Die eingestellte, gewünschte Zuspannkraft hängt somit von geometrischen Daten (Spindelsteigung und Übersetzungsverhältnis $ü$) des Aktuators, von der Motorkonstanten $k_t$, vom Gesamtwirkungsgrad $\eta$ und der zu berücksichtigenden Konstantreibung $M_{R0}$ ab. Der Zusammenhang zwischen eingestellter Maximalkraft und dem Maximalstromwert ist somit linear.

Während die geometrischen Daten das Aktuators bekannt sind und als konstant angenommen werden können, ist die Motorkonstante temperaturabhängig. Der Wirkungsgrad des Aktuators und die Konstantreibung ändern sich nicht nur in Abhängigkeit von der Temperatur (Schmiermittel) sondern sind auch abhängig vom Verschleiß, d.h. sie sind beispielsweise abhängig von der Anzahl der Betätigungen der Feststellbremse.

Wenn im System ein hydraulischer Vordruck $p_{hyd}$ am Kolben mit der wirksamen Fläche $A_{eff}$ anliegt, so überlagert sich dieser mit der eingestellten Zuspannkraft nach (Gl. 2). Dies kann wie folgt dargestellt werden:

$$F_{epb} = \frac{(i_{max} \cdot k_t - M_R) \cdot \eta \cdot ü \cdot 2 \cdot \pi}{p} + p_{hyd} \cdot A_{eff} \quad (\text{Gl. 3}).$$

Aus einer Umstellung von (Gl. 3) nach $i_{max}$ ergibt sich der erfindungsgemäße Zusammenhang, der den hydraulischen Vordruck berücksichtigt:

$$i_{max} = \frac{(F_{epb} - p_V \cdot A_{eff}) \cdot p_{Sp}}{\eta \cdot ü \cdot \pi \cdot k_t} + \frac{M_R}{k_t} = (F_{epb} - p_v \cdot A_{eff}) \cdot m(\eta) + b(\eta) \quad (\text{Gl. 4}).$$

Der Maximalstromwert setzt sich in (Gl. 4) aus zwei Komponenten zusammen. Die erste Komponente erzeugt die eigentliche Kraft unter der Randbedingung, dass die Konstantreibung Null ist. Die zweite Komponente berücksichtigt den Anteil des Stroms, der gebraucht wird, um überhaupt eine Drehung des Motors zu bewirken. Beide Komponenten hängen nicht nur vom Verschleiß sondern auch über die Motorkonstante von der Temperatur ab.

Bei der Berechnung des Maximalstromwerts muss berücksichtigt werden, dass die erste Komponente niemals kleiner als Null werden darf. Dies bedeutet, dass immer

$$F_{epb} \geq p_v \cdot A_{eff} \quad (\text{Gl. 5})$$

gelten muss. Somit müssen Kraftanforderungen, die kleiner sind als der momentan herrschende hydraulische Vordruck (Pedaldruck), entsprechend angehoben werden und in entsprechenden Kennfeldern für die Berechnung von $i_{max}$ zur Verfügung gestellt werden.

Die zunächst unbekannten Parameter $m(\eta)$ und $b(\eta)$ aus (Gl. 4) können in einem Ausführungsbeispiel der Erfindung durch entsprechende Versuche vorab ermittelt werden.

In einem weiteren Ausführungsbeispiel kann $b(\eta)$, da es den Stromanteil repräsentiert, der für die Bewegung des Motors an sich gebraucht wird, durch den bei einem Zuspannvorgang ermittelten Leerlaufstrom $i_{leerlauf}$ als guten Schätzwert ersetzt werden. Hieraus ergibt sich:

$$i_{max} = (F_{epb} - p_v \cdot A_{eff}) \cdot m(\eta) + i_{leerlauf} \qquad \text{(Gl. 6)}.$$

In einem weiteren Ausführungsbeispiel kann auch der Parameter $m(\eta)$ der krafterzeugenden Komponente in Abhängigkeit von $i_{leerlauf}$ ausgedrückt werden $(m(\eta) = m(i_{leerlauf}))$.

Zur Berücksichtigung der Temperaturabhängigkeit des Maximalstromwerts wird eine Korrekturkomponente $i_{korr}(T)$ berücksichtigt, die beispielsweise die in der unten stehenden Tabelle aufgeführten Werte (in A) für die angegebenen Temperaturbereiche T1 bis T4 (Aktuatortemperatur) aufweist:

|  | T1 | T2 | T3 | T4 |
|---|---|---|---|---|
| $i_{korr}$ (A) | 4 | 2 | 0 | 2 |

Das Kennfeld wird dabei in folgenden Felder unterteilt:

- T1: -40°C < T < -20°C
- T2: -20°C < $T$ < 0°C
- T3: 0°C < $T$ < 80°C
- T4: 80°C < $T$ < 100°C

Alternativ kann auch eine Korrektur durchgeführt werden, die zusätzlich zur Temperaturabhängigkeit die am Gleichstrommotor anliegende Spannung (Spannungsbereiche U1 bis U4) berücksichtigt:

| $*i_{korr}$ (A) | T1 | T2 | T3 | T4 |
|---|---|---|---|---|
| U1 | 6 | 3 | 2 | 4 |
| U2 | 5 | 2 | 1 | 3 |
| U3 | 4, 5 | 1 | 0 | 2 |
| U4 | 3,5 | 0 | -1 | 1 |

Das Kennfeld wird dabei in folgenden Felder unterteilt:

- T1: -40°C < $T$ < -20°C   U1: 8 V < $u$ < 10 V
- T2: -20°C < $T$ < 0°C   U2: 10 V < $u$ < 12 V
- T3: 0°C < $T$ < 80°C   U3: 12 V < $u$ < 14 V
- T4: 80°-C < $T$ < 100°C-   U4: 14 V < $u$ < 16 V

Aus obigem Modell folgt, dass der Korrekturwert Null für den Nominalfall gilt, nämlich $u$ = 13 V und Raumtemperatur.

Beide Tabellen können auch wesentlich mehr Stützstellen beinhalten. Zwischen den angegebenen Stützstellen wird linear interpoliert.

Für die Bestimmung des richtigen Korrekturwerts muss die Temperatur des Aktuators bekannt sein. Sollte eine Messung der Temperatur direkt am Aktuator aus Kostengründen nicht möglich sein, kann anstelle der Temperatur des Aktuators insbesondere für die Bereiche T1 bis T3 die Umgebungstemperatur verwendet werden. Sollte die Aktuatortemperatur größer sein als die gemessenen Umgebungstemperaturen, so wirkt sich das auf die eingestellte Zuspannkraft nur dahingehend aus, dass diese zu groß wird. In Bezug auf die Fahrzeugsicherheit ist dies aber tolerierbar.

Der Bereich T4 kann nicht durch eine Messung der Umgebungstemperatur ermittelt werden. Die Temperaturen aus dem Bereich T4 ergeben sich allerdings auch nur dann, wenn der Aktuator sich selbst sehr stark aufheizt (crazy-driver) oder durch eine heiße Bremsanlage von außen aufgeheizt wird. Diese Fälle können jedoch durch Temperaturmodelle abgedeckt werden. Der Bereich T4 wird demnach durch eine Kombination einer Umgebungstemperaturmessung und zwei Temperaturmodelle (Selbstaufheizung des Aktuators und Aufheizung durch Bremsanlage) realisiert.

Aus obigen Betrachtungen zur Temperaturkorrektur und ggf. Spannungskorrektur ergibt sich die folgende Gleichung für die Bestimmung des Abschaltstroms:

$$i_{\max} = (F_{epb} - p_v \cdot A_{eff}) \cdot m(\eta) + i_{leerlauf} + i_{korr}(T, ggf.u) \qquad \text{(Gl. 7)}.$$

In einem weiteren Ausführungsbeispiel kann der Verschleiß durch eine Abhängigkeit der Parameter $m(\eta)$ bzw. $i_{korr}$ von der Anzahl der bisher erfolgten Betätigungen n des Aktuators abhängig gestaltet werden. Das bedeutet

$$m(\eta) = g(n) \; ; \; i_{korr} = f(T, ggf. u, n) \qquad \text{(Gl. 9)}.$$

Da auch am Ende oder nach Abschluss des Zuspannvorgangs die tatsächlich aufgebrachte Kraft nicht explizit bekannt ist, kann in einem bevorzugten Ausführungsbeispiel, um zu überprüfen, ob die erreichte Zuspannkraft ausreichend ist und dem vorgegebenen Wert entspricht, der beim Zuspannen zurückgelegte Zuspannweg $X_{clamp}$, d.h. der Betätigungsweg ausgehend vom Anlegepunkt ermittelt werden. Wenn die Sattelkennlinie der Feststellbremse gerade der "Normsattelkennlinie" entspricht, kann aus dieser anhand der gewünschten Zuspannkraft ein Normzuspannweg ermittelt werden. Bei einem Vergleich des tatsächlich zurückgelegten Zuspannweges mit dem Normzuspannweg kann abgeschätzt werden, ob die erreichte Zuspannkraft auch der gewünschten Zuspannkraft entspricht. Sollte der eingestellte Zuspannweg deutlich kleiner sein als die Normwegdifferenz, so wird in einem besonders bevorzugten Ausführungsbeispiel durch die Steuereinheit eine Nachspannfunktion aktiviert.

Bevorzugt wird das Nachspannen ohne das explizite Ausschalten der H-Brücke direkt im Anschluss an den Zuspannvorgang durchgeführt, da aus Versuchen bekannt ist, dass zum Wideranlaufen des Aktuators ein deutlich höherer Strom benötigt wird, als beim letzten Zuspannen. Der direkte Anschluss der Nachspannfunktion an den Zuspannvorgang hat den Vorteil, dass nicht noch einmal ein sehr hoher Einschaltstrom auftritt.

Eine Ausführungsmöglichkeit zum Nachspannen besteht darin, mittels einer Wegregelung ein weiteres Zuspannen der Feststellbremse durchzuführen. Hierbei geht man von der beim Ende des Zuspannvorgangs vorliegenden Position aus. Die Wegregelung verwendet ausgehend hiervon einen Positionssollwert, der einen um *dx* größeren Wert aufweist als die Position am Ende des Zuspannvorgangs. Bei der um *dx* größeren Position wird davon ausgegangen, dass die Bremsbacken mit einer entsprechend größeren Kraft zugespannt werden. Der Wegregler versucht beim Nachspannen, den um *dx* größeren Wert in Zuspannrichtung einzustellen. Hierbei wird die für den eigentlichen Zuspannvorgang verwendete Grenze (Maximalstromwert) nicht angewendet, jedoch ein weiterer ("aufgeweichter") Stromgrenzwert vorgegeben, der überwacht wird. Der weitere Stromgrenzwert ist charakteristisch für den Zustand, bei dem der Aktuator am Ende seiner physikalischen Möglichkeiten ist, d.h. der Aktuator überschreitet einen absoluten Maximalstromwert nicht. Das Nachspannen wird durch die Steuereinheit entweder beim Erreichen des um *dx* größeren Weges gestoppt oder, wenn dieser nicht erreicht wird, beim Erreichen des weiteren Stromgrenzwerts.

Eine weitere Möglichkeit, eine Nachspannfunktion zu realisieren, besteht in der sogenannten "Knock-Funktion". Diese spezielle Variante des Nachspannens kann in Abhängigkeit von der Aktuatortemperatur, der zur Verfügung stehenden Spannung und dem erreichten Abschaltstrom am Ende des Zuspannvorgangs durchgeführt werden. Hierbei wird eine Anzahl von Drehmomentimpulsen auf den Aktuator gegeben, so dass sich eine höhere Zuspannkraft einstellt. Zur Erzeugung der Drehmomentimpulse wird die H-Brücke für eine definierte Zeit eingeschaltet. Danach wird eine vorgegebene Zeit gewartet (z.B. 150 ms). Wird während dieser Einschaltphase nach Ablauf einer minimalen Zeit (z.B. 50 ms) der maximal vorgegebene Strom (weiterer Stromgrenzwert oder Maximalstromwert) überschritten, so wird dieser Drehmomentimpuls abgebrochen und wieder die bestimmte, vorgegebene Zeit gewartet. Beispielsweise kann die folgende Anzahl von Drehmomentimpulsen (auch "Knocks" genannt) angewendet werden:

$$n_{Knocks} = trunc\left(\frac{|T|}{10°C} + 1\right) \qquad \text{(Gl. 10)}.$$

Die Impulse $n_{Knocks}$ sind jeweils 150 ms lang und folgen alle 300 ms aufeinander.

Die "Knock-Funktion" kann auch analog während des "normalen" Zuspannvorgangs, insbesondere an dessen Ende, durchgeführt werden. Ihre Anwendung ist somit nicht auf das Nachspannen beschränkt.

Für die Bestimmung des Maximalstromwerts wird, wie oben dargestellt, der aktuelle Leerlaufstrom berücksichtigt. Der Leerlaufstrom wird beim Überfahren des Lüftspiels vermessen. Als Realisierung zur Vermessung des Leerlaufstroms kann das betragsmäßige Minimum des Stroms beim Zuspannen als Leerlaufstromwert verwendet werden. Hierdurch muss der Anlaufstrom nicht gesondert berücksichtigt werden und es wird auch dann ein Ergebnis ermittelt, wenn kein Lüftspiel vorhanden ist. Das Minimum des Stroms kann in diesem Fall ebenfalls als Ersatzwert verwendet werden, wobei der so gefundenen Wert für den Leerlaufstrom auf einen Maximalwert zu begrenzen ist.

Zur Bestimmung der zur Maximalstromwertberechnung verwendeten Temperatur muss aus den gemessenen Aktuatortemperaturen diejenige Temperatur gewählt oder berechnet werden, die letztendlich zur Berechnung des Maximalstromwerts verwendet wird. Insbesondere liegen bei der Verwendung von Feststellbremsen auf beiden Seiten des Kraftfahrzeugs zwei Aktuatoren vor, bei welchen Temperaturmessungen durchgeführt werden. Sollten die Messungen an beiden Aktuatoren nicht erkennbar falsch sein, so wird in vorteilhafter Weise für die Berechnung des Abschaltstroms diejenige Temperatur gewählt, die von beiden einen höheren Abschaltstrom erzeugen würde. Sollte eine der beiden Temperaturmessungen erkennbar falsch sein, so wird der Messwert der intakten Messung zur Bestimmung des Maximalstromwerts herangezogen. Falls beide Messungen der Temperatur erkennbar falsch sind, so kann eine "worst case"-Temperatur, beispielsweise -40°C, für die Berechnung des Maximalstromwerts herangezogen werden.

Alternativ zur Verwendung einer Strombegrenzung, um die gewünschte Zuspannkraft einzustellen, kann die gewünschte Zuspannkraft über einen vorher ermittelten Zuspannweg eingestellt werden. Hierbei wird der unten im Zusammenhang mit dem Lösen der Feststellbremse diskutierte Zusammenhang zwischen Zuspannkraft und Kolbenweg bzw. der Verformung des Bremssattels und der Beläge genutzt werden. Dieser Zusammenhang ergibt sich aus der Steifigkeit des Systems und setzt sich im Wesentlichen aus der Steifigkeit der Bremsfaust (material- und geometrieabhängig) und der Bremsbeläge zusammen. Diese Steifigkeit spielt allerdings erst eine Rolle, wenn der Anlegepunkt erreicht ist. Demzufolge ist die Voraussetzung für die Anwendung dieses Ausführungsbeispiel der Erfindung eine sichere Erkennung des Anlegepunkts, die analog zu der unten im Kapitel "Lösen der Feststellbremse" erläuterten Anlegepunkterkennung unter Berücksichtigung des hydraulischen Vordrucks erfolgt. Analog zu unten stehendem Verfahren kann auch die Positionskalibrierung durchgeführt werden, die zur Kalibrierung des Kennlinienzusammenhangs zwischen Zuspannkraft und Kolbenweg dient.

Bei der Bestimmung des durch den Aktuator zurückzulegenden Wegs für eine bestimmte, gewünschte Zuspannkraft muss weiterhin berücksichtigt werden, dass die Steifigkeit des Aktuators Änderungen unterliegt, die beispielsweise aus dem Zustand der Bremsbeläge (Verschleiß, Temperatur, Temperatur der Bremsscheibe) herrühren. Um diese Änderungen zu berücksichtigen, wird entweder mit einer "worst-case-Kennlinie" gearbeitet, die aufgrund von Sicherheitsbetrachtungen die genannten Änderungen abdeckt. Allerdings führt eine solche "worst-case-Kennlinie" zu einer erhöhten mechanischen Belastung des Aktuators. Alternativ können für die verschiedenen Änderungsfälle unterschiedliche Kennlinien ermittelt und in der Steuereinheit hinterlegt werden (z.B. Scheibentemperaturmodell mit schneller Änderung, Modell für Verschleiß oder Anzahl der Bremsbetätigungen mit langsamer Änderung bei gelegentlichem Vermessen). Abhängig von der jeweiligen Änderung kann dann die jeweils gültige Kennlinie ausgewählt und bei der Ermittlung des zurückzulegenden Wegs des Aktuators angewendet werden.

Grundsätzlich lassen sich die Zuspannkonzepte "Maximalstromwertbegrenzung" und "Zuspannwegbegrenzung" auch kombinieren. Beispielsweise kann ein Konzept als Masterkonzept ausgewählt werden und mit dem jeweils anderen Konzept überprüft werden. So ist es sinnvoll, nach einem Zuspannen gemäß "Maximalstromwertbegrenzung" zu überprüfen, ob sich der gefahrene Weg im Rahmen des Konzepts "Zuspannwegbegrenzung" bewegt. Ggf. kann eine Nachspannfunktion (siehe oben) der Steuereinheit aktiviert werden.

Auch kann es durch Ausfall von Sensoren erforderlich werden, das jeweils andere Zuspannkonzept anzuwenden. Fällt beispielsweise der Temperatursensor aus, so kann alternativ das Konzept "Zuspannwegbegrenzung" oder das Konzept "Maximalstromwertbegrenzung" mit einer "worst-case-Temperatur" bis zur Reparatur des Sensors verwendet werden.

### 5. Lösen der erfindungsgemäßen Feststellbremse

Zum Lösen der Feststellbremse wird durch den Aktuator rein gesteuert ein bestimmter Verfahr- oder Löseweg

$\varphi_{total\_release}$ in Löserichtung zurückgelegt. Hierbei wird der Sollverfahrweg aus dem aktuellen Abstand zur Anlageposition (ohne Vordruck) $\varphi_{clamp}$ und einem vorzugebenden Lüftspiel $\varphi_{airgap\_set}$

(hierbei ist das maximale Lüftspiel des Kolbens, das durch die Position der Antriebsmutter im Kolben definiert wird, gemeint) ermittelt.

Es wird daher folgender Gesamtweg durchfahren:

$$\varphi_{total\_release} = \varphi_{clamp} + \varphi_{airgap\_set} \qquad \varphi_{airgap\_set} > 0 \qquad \text{(Gl. 11)}$$

In einem bevorzugten Ausführungsbeispiel weist die Steuereinheit zusätzlich eine sogenannte "Disengage-Funktion/Engage-Funktion" auf. Mittels der Disengage-Funktion wird zusätzlich zu dem oben definierten Lüftspiel ein erweitertes Lüftspiel $\varphi_{total\_release} + \varphi_{erw}$ vorgegeben und durch den Wegregler angefahren. Mittels der Engage-Funktion wird durch die Steuereinheit ein Zurückfahren auf das ursprünglich eingestellte Lüftspiel $\varphi_{total\_release}$ gesteuert. Mittels der Engage-/Disengage-Funktionen kann z.B. bei einer erkennbaren Erhitzung der Bremse ohne Bremswunsch ein sicheres Lüften der Feststellbremse realisiert werden. Hierbei weist das Steuergerät eine Notfunktion auf, die auch aus der "Disengage-Position" mit erweitertem Lüftspiel ein Zuspannen vorsieht, so dass der Anlegepunkt sicher erkannt werden kann.

Die Position der Bremsbacken oder die Position des Aktuator-Kolbens ist in der Regel, beispielsweise bei Anwendung obigen Motormodells (Gl. 1) zur Bestimmung der Position nicht genau bekannt, da das Modell Vereinfachungen enthält und auch die Motorparameter nicht präzise bekannt sind. Die durch die Ungenauigkeiten und Vereinfachungen entstandenen Fehler werden bei der Bestimmung der Position integriert und führen unter ungünstigen Umständen über mehrere Zuspannvorgänge schnell zu Abweichungen, so dass das sichere Einstellen des Lüftspiels, das auf einer reinen Positionsregelung beruht, nicht mehr gewährleistet ist. Aus diesem Grund wird in einem bevorzugten Ausführungsbeispiel der vorliegenden Erfindung die durch das Modell ermittelte Position des Kolbens oder der Bremsbacken bei jedem Zuspannen kalibriert. Kalibrieren heißt hierbei, dass der aktuell mit Hilfe eines Motormodells ermittelte Positionswert korrigiert wird.

Für die Kalibrierung der Position wird ein Bremssattelsteifigkeits-Modell verwendet, welches kennlinienbasiert oder parametrisch vorliegen kann. Unter der Annahme, dass die Zuspannkraft quadratisch von dem zurückgelegten Weg abhängt, sofern der Weg größer oder gleich Null ist, und keine Kraft aufgewendet werden muss, wenn der Weg kleiner als Null ist, und unter der weiteren Annahme, dass am Anlegepunkt lediglich eine Kraft verursacht durch den hydraulischen Vordruck anliegt, kann folgender parametrischer Zusammenhang abgeleitet werden, der zur Positionskalibrierung genutzt werden kann ($p_{piston}$ ... Druck am Kolben):

$$x_{cp} = \sqrt{\frac{A_{eff} \cdot p_{piston}}{c}} \qquad \text{(Gl. 12)}$$

Demnach kann bei bekanntem Anlegepunkt eine Kalibrierung der Position auf den Anlegepunkt mit dem in (Gl. 12) angegebenen Zusammenhang vorgenommen werden, indem der bekannte Anlegepunkt mit dem errechneten Positionswert $x_{cp}$ verglichen wird.

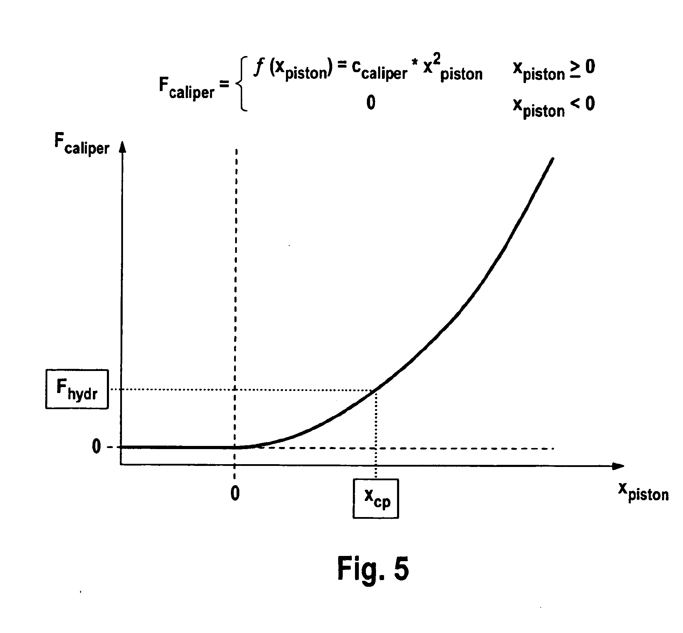

Der Zusammenhang zwischen Zuspannkraft und vom Aktuator zurückgelegtem Weg wird noch einmal anhand des in Fig. 5 dargestellten Diagramms veranschaulicht. Die gepunktete Linie symbolisiert die Situation am Anlegepunkt, an dem der zurückgelegte Weg $x_{cp}$ dem hydraulischen Vordruck $F_{hydr}$ entspricht. Über diesen Zusammenhang können die übrigen Positionen der Kennlinie entsprechend kalibriert werden.

Alternativ kann auch auf den Punkt des zurückgelegten Wegs, in dem sich der Maximalstromwert, d.h. die gewünschte Zuspannkraft, einstellt, kalibriert werden. Dieser Punkt ist durch die gewünschte Zuspannkraft über das Motormodell ebenfalls zugänglich.

Sollte der Vordruck nicht verfügbar sein, so ist dennoch eine Positionskalibrierung erforderlich. In diesem Fall kann in einem weiteren Ausführungsbeispiel ein fest vorgegebener Wert für den Vordruck (z.B. 40 bar) verwendet werden. Gegebenenfalls muss dann bei der Vorgabe des Lüftspielwegs $\varphi_{airgap\_set}$ ein etwas größerer Wert eingestellt werden, so dass es auch dann nicht zu einem Schleifen der Bremse kommt, wenn der tatsächliche Vordruck deutlich größer als der angenommene Wert war.

In einem weiteren bevorzugten Ausführungsbeispiel kann der verwendete Vordruck abhängig von einer ggf. vorhandenen Hangneigung gewählt werden. Alternativ kann der verwendete Vordruckwert von der Sattelkennlinie abhängig bestimmt werden. Bei einer quadratisch verlaufenden Kennlinie kann beispielsweise der Vordruck verwendet werden, der dem halben Verfahrweg entspricht. Bei einem maximalen Druck von 200 bar könnte somit beispielsweise ein Vordruck von etwa 50 bar verwendet werden.

Voraussetzung für die Positionskalibrierung ist die Kenntnis des tatsächlichen Anlegepunkts, der sich im Laufe des Betriebs der Feststellbremse verschiebt und der mit der erfindungsgemäßen Feststellbremse ohne Kraftmessung nicht direkt gemessen werden kann.

Durch theoretische Betrachtungen ausgehend von der Erkenntnis, dass am Anlegepunkt die Ableitung der Zuspannkraft nach dem Zuspannweg größer als Null wird, ergibt sich als Kriterium für die Bestimmung des Anlegepunkts der Zusammenhang:

$$\frac{di}{dt} > 0$$

Eine robuste technische Umsetzung zur Anlegepunkterkennung entsprechend obigen Zusammenhangs berücksichtigt die folgenden störenden Randbedingungen:

- verrauschte Signale (Strom $i$ und Spannung $u$)
- Temperaturabhängigkeit aller Größen ($R_{mot}$, $k_t$, $M_{R0}$)
- überlagerte dynamische Effekte (Anlaufverhalten)
- qualitativ verändertes Zuspannverhalten aufgrund von Verschleiß
- Systemeinflüsse (z.B. durch An- bzw. Abschalten des "Nachbaraktuators")

Für die technische Umsetzung der Anlegepunkterkennung werden Spannung und Strom zyklisch mit der Abtastzeit $T_0$ erfasst (siehe Motormodell (G1. 1)). Die erfassten Werte werden anschließend nach der Zeit differenziert. Als robustes Verfahren hat sich hierfür die quadratische Approximation bewährt, wobei sich als besonders vorteilhaft die Anwendung eines Approximationsfilters dritter Ordnung herausgestellt, bei dem gerade 3 Messwerte für die Bildung einer Parabel verwendet werden.

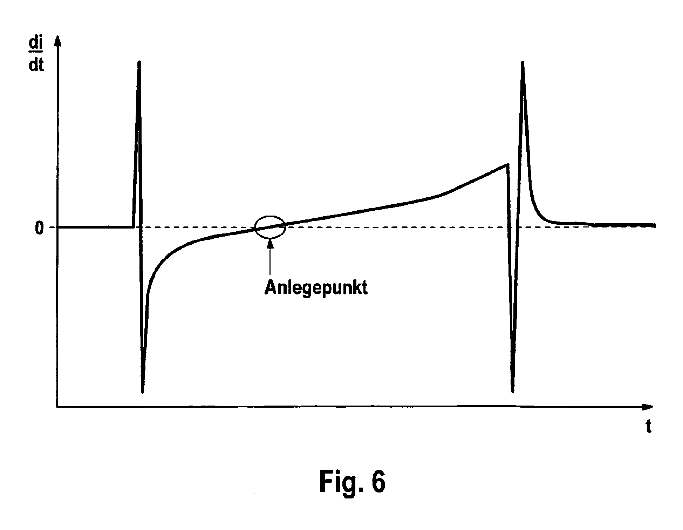

Die zeitliche Ableitung des Stroms ist in dem in Fig. 6 dargestellten Diagramm veranschaulicht. In dieser Darstellung wird deutlich, dass der Anlegepunkt durch einen Nulldurchgang der Ableitung des Stroms nach der Zeit charakterisiert ist. Bei einem größeren Lüftspiel kann es jedoch auch eine ausgedehnte Phase der ersten Ableitung des Stroms geben, in der die Ableitung in der Nähe von Null liegt. Um eine klare Abgrenzung zum Anlaufverhalten zu erreichen, wird die Erkennung des Anlegepunkts durch die Beobachtung von $di/dt$ erst dann vorgenommen, wenn eine negative Ableitung auftritt.

Für das sichere und robuste Erkennen des Anlegepunkts wurde das im Folgenden dargestellte Verfahren entwickelt. Zunächst wird eine (positive) Schranke $i_{p0}$ (Ableitungsschwellwert) für die betrachtete Größe ($di/dt$) festgelegt. Diese Schranke ist ein kleiner (verglichen mit den übrigen Werten $di/dt$) positiver Wert nahe Null. Wird diese Schranke durch $di/dt$ überschritten, so wird die aktuelle Position als potentieller Anlegepunkt gespeichert und ein Zähler gestartet. Der Zähler zählt mit jedem neuen Messwert so lange weiter nach oben, d.h. der Zähler wird durch einen Inkrementierungswert inkrementiert, so lange die betrachtete Größe größer ist als die Schranke $i_{p0}$. Fällt die Größe unter die Schranke, dann wird der Zähler wieder auf Null gesetzt. Der potentielle Anlegepunkt wird genau dann als wirklicher Anlegepunkt betrachtet, wenn der Zähler einen vorgegebenen Wert $n_{Vorgabe}$ (Zählerschwellwert) erreicht. Damit wird sichergestellt, dass als Anlegepunkt die Position gewählt wird, nach der die zu betrachtende Größe mindestens $n_{Vorgabe}$ mal hintereinander größer war als die vorgegebene Schranke. Dieses Verfahren hat sich in der Praxis bewährt und liefert auch bei ungewöhnlichen Stromprofilen sinnvolle Werte.

Eine Prüfung des gefundenen Anlegepunkts auf Plausibilität findet nicht statt, da die Position ja gerade auf den gefundenen Anlegepunkt kalibriert werden soll und somit keine (sinnvolle) Größe zum Vergleich vorliegt.

Bei Vorliegen eines hydraulischen Vordrucks wird ein analoges Verfahren verwendet. Allerdings kann es, je nach realer Sattelsteifigkeit, erforderlich sein, den Grenzwert $n_{Vorgabe}$ herunterzusetzen, weil die Bewegung bei hohen Vordrücken schon vor Ablauf der bei Vordruck Null betrachteten $n_{Vorgabe}$ Messwerten beendet ist. Es wird daher die folgende Abhängigkeit von $n_{Vorgabe}$ vom Vordruck $p_0$ vorgeschlagen:

$$n_{Vorgabe}\left(p_0\right) = 10 - trunc\left(\frac{p_0}{40\ bar}\right)$$

Der oben beschriebene Algorithmus zur Anlegepunkterkennung eignet sich auch dafür, weitere Kalibrierpunkte zu ermitteln. Dies geschieht dadurch, dass die Schranke $i_{p0}$ für einen weiteren Kalibrierpunkt anders gewählt wird. Man kann so versuchen, für die Plausibilitätsprüfung der eingestellten Zuspannkraft über den ermittelten Verfahrweg einen stabileren, d.h. linearen, Teil der Sattelkennlinie zu vermessen. Hierbei wird die Schranke $i_{p0}$ zur Ermittlung des Kalibrierpunkts erhöht. Gegebenenfalls muss auch ein anderes (kleineres) $n_{Vorgabe}$ für die Ermittlung des bei höherer Kraft gefundenen Kalibrierpunkts eingestellt werden.

Das Lüftspiel wird dadurch ermittelt, dass das vor dem aktuellen Zuspannvorgang eingestellte Lüftspiel durch Berechnung der Wegdifferenz zwischen Start des Zuspannvorgangs bis zum Finden des neuen Anlegepunkts ermittelt wird. Nach dem Zuspannen liegen so Messungen für das davor eingestellte Lüftspiel vor. Sollte das vermessene Lüftspiel kleiner sein als das Lüftspiel, das eingestellt werden sollte, so könnte hierin eine fehlerhafte Einstellung liegen. Um den gleichen Fehler, also das Einstellen eines zu kleinen Lüftspiels beim nächsten Lösen zu verhindern, wird für den nächsten Lösevorgang der Sollwert für das Lüftspiel um einen festen Betrag vergrößert. Ist demgegenüber das vermessene Lüftspiel deutlich größer als der vorgegebene Wert, so kann der Sollwert für das nächste Lösen verkleinert werden. Aufgrund von Sicherheitsbetrachtungen ist es sinnvoll, das Lüftspiel in großen Schritten zu vergrößern und in wesentlich kleineren Schritten wieder zu verkleinern.

Nach einem harten Reset der Steuereinheit, in der diese nicht geordnet heruntergefahren wurde, ist der Status des Aktuators unbekannt. Insbesondere liegt keine kalibrierte Position vor, auf die sich die Ansteuerung beziehen könnte. Aus diesem Grund ist vor dem normalen Betrieb der Feststellbremse eine Initialisierungsfahrt des Aktuators notwendig. Die Initialisierungsfahrt startet bei Betätigung des Bedienelements der Feststellbremse. Beim Zuspannen wird die Initialisierung derart vorgenommen, dass beim Zuspannen der normale Maximalstromwert erreicht wird. Bei diesem Zuspannen wird jedoch eine Anlegepunkterkennung nicht durchgeführt. Anschließend wird einmalig, d.h. bis zur nächsten Bestimmung des Anlegepunkts die Position des Aktuators auf den Standardwert der Normkennlinie gesetzt. Hierbei wird davon ausgegangen, dass die Sollzuspannkraft gerade mit dem Abschaltkriterium eingestellt wurde. Damit liegt ein Wert der Position vor, der beim nächsten Öffnen/Lösen ein sicheres Einstellen des Lüftspiels garantiert.

Falls der Fahrer des Kraftfahrzeugs nach einem harten Reset der Steuereinheit die Feststellbremse lösen möchte, startet die Initialisierungsfahrt trotzdem zunächst in Richtung Zuspannen, bis der normale Maximalstromwert erreicht wird. Die sich anschließende Initialisierungsprozedur erfolgt analog zur obigen Prozedur.. Anschließend wird die Feststellbremse gelöst und ein Lüftspiel sicher eingestellt.

Durch unterschiedlichen Verschleiß, durch Modellfehler oder aktuatorspezifische Gegebenheiten kann es zu einer deutlichen, d.h. für den Fahrer des Kraftfahrzeugs spürbaren Asynchronität zwischen zwei in einem Kraftfahrzeug angeordneten Aktuatoren kommen. Dies geschieht beispielsweise, wenn die Lüftspiele links und rechts sehr unterschiedlich eingestellt werden und ein Aktuator beim nächsten Zuspannen seinen Anlegepunkt wesentlich früher erreicht als der andere. Die Zeitdifferenz zwischen der Einstellung beider Anlegepunkte ist ein Maß für die Asynchronität der Aktuatoren. Sollte diese Zeitdifferenz größer werden als eine zulässige Schranke, wird in einem weiteren Ausführungsbeispiel durch eine entsprechende Änderung des Lüftspielsollwerts das synchrone Verhalten wieder hergestellt. Aus Sicherheitsgründen wird der Lüftspielsollwert des scheinbar "schnelleren" Aktuators vergrößert. Vorzugsweise wird diese Adaption in kleinen Schritten (pro Betätigung) durchgeführt, um die Varianz der Anlegepunkterkennung auszugleichen. Außerdem wird in vorteilhafter Weise die Korrektur der Lüftspielsollwerte beider Aktuatoren einzeln aufintegriert, um bei erreichter Synchronität die Korrektur auf beiden Seiten gleichzeitig zu reduzieren, bis das kleinere Lüftspiel dem Normlüftspiel entspricht.

**Patentansprüche**

1.  Verfahren zum Betreiben einer Feststellbremse mit einem Aktuator (5), wobei der Aktuator (5) durch einen in zwei Richtungen betreibbaren Gleichstrommotor (28) angetrieben wird, der über ein selbsthemmendes Getriebe (24) des Aktuators (5) mindestens eine Bremsbacke zum Zuspannen oder Lösen der Feststellbremse in Richtung eines Drehglieds oder davon weg bewegt, wobei eine Steuereinheit (10) für die Steuerung oder Regelung der Bewegung des Gleichstrommotors (28) vorgesehen ist, wobei beim Zuspannen oder Lösen der Feststellbremse in der Regel ein Anlegepunkt der Bremsbacken an dem Drehglied überschritten wird,
    **dadurch gekennzeichnet,**

**dass** durch die Steuereinheit (10) zur Bestimmung des Anlegepunkts die erste Ableitung des beim Zuspannen vom Gleichstrommotor (28) aufgenommenen elektrischen Stroms nach der Zeit gebildet wird.

2. Verfahren nach Anspruch 1, **dadurch gekennzeichnet, dass** durch die Steuereinheit (10) der Anlegepunkt als der Punkt der Bremsbackenstellung bestimmt wird, bei dem die Ableitung des vom Gleichstrommotor (28) aufgenommenen elektrischen Stroms nach der Zeit größer als Null wird, wobei vorzugsweise dieser Wert der ersten Ableitung erst dann als Anlegepunkt identifiziert wird, wenn die Ableitung des Stroms davor negativ war.

3. Verfahren nach Anspruch 1 oder 2, **gekennzeichnet durch** die folgenden Schritte:

   - Festlegen eines positiven Ableitungsschwellwerts ($i_{p0}$) für die erste Ableitung ($di/dt$),
   - Prüfen in vorgegebenen, vorzugsweise regelmäßigen Abständen der Zuspannbewegung des Gleichstrommotors (28), ob die erste Ableitung des vom Gleichstrommotor (28) aufgenommenen Stroms ($di/dt$) größer als der oder gleich dem Ableitungsschwellwert ($i_{p0}$) ist,
   - falls die erste Ableitung größer als der oder gleich dem Ableitungsschwellwert ($i_{p0}$) ist, Merken der aktuellen Bremsbackenposition als potentiellen Anlegepunkt und Starten eines Zählers sowie Inkrementieren des Zählers bei der weiteren Zuspannbewegung des Gleichstrommotors (28) um einen vorher festgelegten Inkrementierungswert, solange die erste Ableitung ($di/dt$) größer als der oder gleich dem Ableitungsschwellwert ($i_{p0}$) ist, oder Zurücksetzen des Zählers auf Null, sobald bei der weiteren Zuspannbewegung des Gleichstrommotors (28) die erste Ableitung ($di/dt$) den Ableitungsschwellwert ($i_{p0}$) wieder unterschreitet,
   - Prüfen, ob der Zähler einen vordefinierten Zählerschwellwert ($n_{Vorgabe}$) überschreitet, und,
   - falls der Zähler den vordefinierten Zählerschwellwert ($n_{Vorgabe}$) überschreitet, Festlegen des jeweiligen gemerkten potentiellen Anlegepunkts als tatsächlicher Anlegepunkt.

4. Verfahren nach einem der Ansprüche 1 bis 3, **dadurch gekennzeichnet, dass** durch die Steuereinheit (10) zur Steuerung oder Regelung der Bewegung des Gleichstrommotors (28) zum Zuspannen der Feststellbremse mit einer gewünschten, vorgegebenen Zuspannkraft ein vom Gleichstrommotor (28) hierfür aufzunehmenden Maximalstromwert bestimmt, das Zuspannen durch eine entsprechende Bewegung des Gleichstrommotors (28) durchgeführt und nach Erreichen des Maximalstromwerts die Bewegung des Gleichstrommotors (28) beendet wird.

5. Verfahren nach einem der Ansprüche 1 bis 4, **dadurch gekennzeichnet, dass** bei der Steuerung oder Regelung des Gleichstrommotors (28) zum Zuspannen und/oder Lösen der Feststellbremse durch die Steuereinheit (10) ein hydraulischer Vordruck berücksichtigt wird, welcher im Fall des Zuspannens aktuell am Kolben anliegt oder im Fall des Lösens beim vorangegangenen Zuspannen am Kolben angelegen hat.

6. Verfahren nach einem der Ansprüche 1 bis 5, **dadurch gekennzeichnet, dass** durch die Steuereinheit (10) beim Zuspannen und/oder Lösen mittels eines Motormodells fortlaufend ein zurückgelegter Betätigungsweg des Gleichstrommotors (28) ermittelt wird.

7. Verfahren nach Anspruch 6, **dadurch gekennzeichnet, dass** durch die Steuereinheit (10) eine mittels eines. Motormodells ermittelte Kolbenposition unter Berücksichtigung des hydraulischen Vordrucks auf den ermittelten Anlegepunkt oder die ermittelte Position beim Erreichen des vorgegebenen Maximalstromwerts kalibriert wird.

8. Verfahren nach einem der Ansprüche 6 bis 7, **dadurch gekennzeichnet, dass** durch die Steuereinheit (10) aus dem Betätigungsweg zwischen dem ermittelten Anlegepunkt und der Betätigungsposition beim Erreichen des vorgegebenen Maximalstromwerts ein zurückgelegter Zuspannweg ermittelt und anschließend der zurückgelegte Zuspannweg mit einem der gewünschten Zuspannkraft entsprechenden Normzuspannweg verglichen wird, wobei bei einer signifikanten Abweichung des zurückgelegten Zuspannwegs vom Normzuspannweg eine Nachspannfunktion der Steuereinheit (10) aktiviert wird.

9. Verfahren nach Anspruch 8, **dadurch gekennzeichnet, dass** die Nachspannfunktion eine Wegregelung beinhaltet, wobei das Nachspannen vorzugsweise direkt nach Beendigung des Zuspannvorgangs durchgeführt wird.

10. Verfahren nach Anspruch 8, **dadurch gekennzeichnet, dass** durch die Steuereinheit (10) zum Nachspannen eine 'Knock-Funktion' verwendet wird, wobei das Nachspannen vorzugsweise direkt nach Beendigung des Zuspannvorgangs durchgeführt wird.

11. Verfahren nach einem der Ansprüche 1 bis 10, **dadurch gekennzeichnet, dass** durch die Steuereinheit (10) zum Lösen der Feststellbremse eine Steuerung der Mutterbewegung in Löserichtung durchgeführt wird, wobei bei der Berechnung des für die Steuerung der Mutterbewegung verwendeten Sollverfahrwegs der beim letzten Zuspannen unter Berücksichtigung des hydraulischen Vordrucks ermittelte Anlegepunkt sowie ein vorgegebenes Lüftspiel berücksichtigt wird.

12. Feststellbremse mit einem Aktuator (5), wobei der Aktuator (5) durch einen in zwei Richtungen betreibbaren Gleichstrommotor (28) angetrieben wird, der über ein selbsthemmendes Getriebe (24) des Aktuators (5) mindestens eine Bremsbacke zum Zuspannen oder Lösen der Feststellbremse in Richtung eines Drehglieds oder davon weg bewegt, wobei eine Steuereinheit (10) für die Steuerung oder Regelung der Bewegung des Gleichstrommotors vorgesehen ist, wobei die Feststellbremse derart ausgebildet ist, dass beim Zuspannen oder Lösen der Feststellbremse in der Regel ein Anlegepunkt der Bremsbacken an dem Drehglied überschritten wird,
**dadurch gekennzeichnet,**
**dass** die Steuereinheit (10) den Anlegepunkt durch Bildung der ersten Ableitung des beim Zuspannen vom Gleichstrommotor (28) aufgenommenen elektrischen Stroms nach der Zeit bestimmt.

13. Feststellbremse nach Anspruch 12, **dadurch gekennzeichnet, dass** die Steuereinheit (10) den Anlegepunkt als den Punkt der Bremsbackenstellung bestimmt, bei dem die Ableitung des vom Gleichstrommotor (28) aufgenommenen elektrischen Stroms nach der Zeit größer als Null wird, wobei vorzugsweise dieser Wert der ersten Ableitung erst dann als Anlegepunkt identifizierbar ist, wenn die Ableitung des Stroms davor negativ war.

14. Feststellbremse nach einem der Ansprüche 12 bis 13, **dadurch gekennzeichnet, dass** die Steuereinheit (10) zur Steuerung oder Regelung der Bewegung des Gleichstrommotors (28) zum Zuspannen der Feststellbremse mit einer gewünschten, vorgegebenen Zuspannkraft ein vom Gleichstrommotor (28) hierfür aufzunehmenden Maximalstromwert bestimmt, das Zuspannen durch eine entsprechende Bewegung des Gleichstrommotors (28) durchführt und nach Erreichen des Maximalstromwerts die Bewegung des Gleichstrommotors (28) beendet.

15. Feststellbremse nach einem der Ansprüche 12 bis 14, **dadurch gekennzeichnet, dass** die Steuereinheit bei der Steuerung oder Regelung des Gleichstrommotors (28) zum Zuspannen und/oder Lösen der Feststellbremse einen hydraulischen Vordruck berücksichtigt, welcher im Fall des Zuspannens aktuell am Kolben anliegt oder im Fall des Lösens beim vorangegangenen Zuspannen am Kolben angelegen hat.

16. Feststellbremse nach einem der Ansprüche 12 bis 15, **dadurch gekennzeichnet, dass** die Steuereinheit (10) beim Zuspannen und/oder Lösen mittels eines Motormodells fortlaufend einen zurückgelegten Betätigungsweg des Gleichstrommotors (28) ermittelt.

17. Feststellbremse nach Anspruch 16, **dadurch gekennzeichnet, dass** die Steuereinheit (10) eine mittels eines Motormodells ermittelte Kolbenposition unter Berücksichtigung des hydraulischen Vordrucks auf den ermittelten Anlegepunkt oder die ermittelte Position beim Erreichen des vorgegebenen Maximalstromwerts kalibriert.

18. Feststellbremse nach einem der Ansprüche 16 bis 17, **dadurch gekennzeichnet, dass** die Steuereinheit (10) aus dem Betätigungsweg zwischen dem ermittelten Anlegepunkt und der Betätigungsposition beim Erreichen des vorgegebenen Maximalstromwerts einen zurückgelegten Zuspannweg ermittelt und anschließend den zurückgelegte Zuspannweg mit einem der gewünschten Zuspannkraft entsprechenden Normzuspannweg vergleicht, wobei bei einer signifikanten Abweichung des zurückgelegten Zuspannwegs vom Normzuspannweg eine Nachspannfunktion der Steuereinheit (10) aktivierbar ist.

19. Feststellbremse nach Anspruch 18, **dadurch gekennzeichnet, dass** die Nachspannfunktion eine Wegregelung beinhaltet, wobei die Steuereinheit (10) das Nachspannen vorzugsweise direkt nach Beendigung des Zuspannvorgangs durchführt.

20. Feststellbremse nach Anspruch 18, **dadurch gekennzeichnet, dass** die Steuereinheit (10) zum Nachspannen eine 'Knock-Funktion' verwendet, wobei die Steuereinheit (10) das Nachspannen vorzugsweise direkt nach Beendigung des Zuspannvorgangs durchführt.

21. Feststellbremse nach einem der Ansprüche 11 bis 17, **dadurch gekennzeichnet, dass** die Steuereinheit (10) zum Lösen der Feststellbremse eine Steuerung der Mutterbewegung in Löserichtung durchführt, wobei die Steuereinheit (10) bei der Berechnung des für die Steuerung der Mutterbewegung verwendeten Sollverfahrwegs den beim letzten Zuspannen unter Berücksichtigung des hydraulischen Vordrucks ermittelten Anlegepunkt sowie ein vorgegebenes Lüftspiel berücksichtigt.

## Claims

**1.** Method for operating a parking brake having an actuator (5), wherein the actuator (5) is driven by a direct current motor (28) which can be operated in two directions and which moves, via a self-locking gear mechanism (24) of the actuator (5), at least one brake shoe for applying or releasing the parking brake in the direction of a rotary element or away therefrom, wherein a control unit (10) is provided for performing open-loop or closed-loop control of the movement of the direct current motor (28), wherein, when the parking brake is applied or released, an application point of the brake shoes against the rotary element is generally overshot, **characterized in that**, in order to determine the application point, the control unit (10) forms the first derivative over time of the electric current which is taken up by the direct current motor (28) during the application of the brake.

**2.** Method according to Claim 1, **characterized in that** the control unit (10) determines the application point as the positioning point of the brake shoe at which the derivative over time of the electric current which is taken up by the direct current motor (28) becomes greater than zero, wherein this value of the first derivative is preferably not identified as the application point until the derivative of the current before then has been negative.

**3.** Method according to Claim 1 or 2, **characterized by** the following steps:

- definition of a positive derivative threshold value ($i_{p0}$) for the first derivative ($di/dt$),
- checking of the brake-application movement of the direct current motor (28) at predefined, preferably regular, intervals in order to determine whether the first derivative of the current ($di/dt$) taken up by the direct current motor (28) is greater than or equal to the derivative threshold value ($i_{p0}$),
- if the first derivative is greater than or equal to the derivative threshold value ($i_{p0}$), noting of the current brake shoe position as a potential application point and starting of a counter as well as incrementing of the counter by a previously defined incrementation value during the further brake-application movement of the direct current motor (28) as long as the first derivative ($di/dt$) is greater than or equal to the derivative threshold value ($i_{p0}$), or resetting of the counter to zero as soon as the first derivative ($di/dt$) drops below the derivative threshold value ($i_{p0}$) again during the further brake-application movement of the direct current motor (28),
- checking whether the counter exceeds a predefined counter threshold value ($n_{predef}$), and
- if the counter exceeds the predefined counter threshold value ($n_{predef}$), definition of the respective, noted potential application point as the actual application point.

**4.** Method according to one of Claims 1 to 3, **characterized in that**, in order to perform open-loop or closed-loop control of the movement of the direct current motor (28) in order to apply the parking brake with a desired, predefined brake-application force, the control unit (10) determines a maximum current value which is to be taken up for said force by the direct current motor (28), the application of the brake is carried out by a corresponding movement of the direct current motor (28), and the movement of the direct current motor (28) is ended after the maximum current value has been reached.

**5.** Method according to one of Claims 1 to 4, **characterized in that**, during the open-loop or closed-loop control of the direct current motor (28) for applying and/or releasing the parking brake, the control unit (10) takes into account a hydraulic admission pressure which is currently present at the piston if the brake is applied or was present at the piston if the brake has been released when it had previously been applied.

**6.** Method according to one of Claims 1 to 5, **characterized in that**, when the brake has been applied and/or released by means of a motor model, the control unit (10) continuously determines an activation travel which has been carried out by the direct current motor (28).

**7.** Method according to Claim 6, **characterized in that** the control unit (10) calibrates a piston position, determined by means of a motor model, while taking into account the hydraulic admission pressure acting at the determined application point or the determined position when the predefined maximum current value is reached.

**8.** Method according to one of Claims 6 to 7, **characterized in that** the control unit (10) determines a brake-application travel which has been carried out from the activation travel between the determined application point and the activation position when the predefined maximum current value is reached, and the brake-application travel which has been carried out is subsequently compared with a standard brake-application travel corresponding to the desired brake-application force, wherein, when there is a significant deviation of the brake-application travel which has been carried out from the standard brake-application travel, a retightening function of the control unit (10) is activated.

9. Method according to Claim 8, **characterized in that** the retightening function includes a travel adjustment, wherein the retightening of the brake is preferably carried out directly after the brake-application process has ended.

10. Method according to Claim 8, **characterized in that** the control unit (10) uses a knock function for the retightening of the brake, wherein the retightening of the brake is preferably carried out directly after the brake-application process has ended.

11. Method according to one of Claims 1 to 10, **characterized in that**, in order to release the parking brake, the control unit (10) controls the movement of the nut in the release direction, wherein the application point which was determined during the last application of the brake, while taking into account the hydraulic admission pressure, and a predefined brake-application clearance are taken into account in the calculation of the setpoint movement travel used for the control of the movement of the nut.

12. Parking brake having an actuator (5), wherein the actuator (5) is driven by a direct current motor (28) which can be operated in two directions and which moves, via a self-locking gear mechanism (24) of the actuator (5), at least one brake jaw for applying or releasing the parking brake in the direction of a rotary element or away therefrom, wherein a control unit (10) is provided for performing open-loop or closed-loop control of the movement of the direct current motor, wherein the parking brake is embodied in such a way that, when the parking brake is applied or released, an application point of the brake shoes against the rotary element is generally overshot, **characterized in that** the control unit (10) determines the application point by forming the first derivative over time of the electric current which is taken up by the direct current motor (28) during the application of the brake.

13. Parking brake according to Claim 12, **characterized in that** the control unit (10) determines the application point as the positioning point of the brake shoe at which the derivative over time of the electric current which is taken up by the direct current motor (28) becomes greater than zero, wherein this value of the first derivative preferably cannot be identified as the application point until the derivative of the current before then has been negative.

14. Parking brake according to one of Claims 12 to 13, **characterized in that**, in order to perform open-loop or closed-loop control of the movement of the direct current motor (28) in order to apply the parking brake with a desired, predefined brake-application force, the control unit (10) determines a maximum current value which is to be taken up by the direct current motor (28) for this purpose, carries out the application of the brake by means of a corresponding movement of the direct current motor (28), and ends the movement of the direct current motor (28) after the maximum current value has been reached.

15. Parking brake according to one of Claims 12 to 14, **characterized in that**, during the open-loop or closed-loop control of the direct current motor (28) in order to apply and/or release the parking brake, the control unit takes into account a hydraulic admission pressure which is currently present at the piston if the brake is applied or was present at the piston if the brake has been released when it had previously been applied.

16. Parking brake according to one of Claims 12 to 15, **characterized in that**, when the brake is applied and/or released by means of a motor model, the control unit (10) continuously determines an activation travel which has been carried out by the direct current motor (28).

17. Parking brake according to Claim 16, **characterized in that** the control unit (10) calibrates a piston position, determined by means of a motor model, while taking into account the hydraulic admission pressure acting at the determined application point or the determined position when the predefined maximum current value is reached.

18. Parking brake according to one of Claims 16 to 17, **characterized in that** the control unit (10) determines a brake-application travel which has been carried out from the activation travel between the determined application point and the activation position when the predefined maximum current value is reached, and the brake-application travel which has been carried out is subsequently compared with a standard brake-application travel corresponding to the desired brake-application force, wherein, when there is a significant deviation of the brake-application travel which has been carried out from the standard brake-application travel, a retightening function of the control unit (10) can be activated.

**19.** Parking brake according to Claim 18, **characterized in that** the retightening function includes a travel adjustment, wherein the control unit (10) preferably carried out the retightening of the brake directly after the brake-application process has ended.

**20.** Parking brake according to Claim 18, **characterized in that** the control unit (10) uses a knock function for the retightening of the brake, wherein the control unit (10) preferably carries out the retightening of the brake directly after the brake-application process has ended.

**21.** Parking brake according to one of Claims 11 to 17, **characterized in that**, in order to release the parking brake, the control unit (10) controls the movement of the nut in the release direction, wherein the control unit (10) takes into account the application point, which was determined during the last application of the brake, while taking into account the hydraulic admission pressure, and a predefined brake-application clearance in the calculation of the setpoint movement travel which is used for the control of the movement of the nut.

**Revendications**

**1.** Procédé pour faire fonctionner un frein de stationnement comprenant un actionneur (5), l'actionneur (5) étant entraîné par un moteur à courant continu (28) pouvant fonctionner dans deux directions, lequel déplace par l'intermédiaire d'un engrenage (24) autobloquant de l'actionneur (5) au moins une mâchoire de frein pour le serrage ou le desserrage du frein de stationnement en approche ou en éloignement d'un élément rotatif, une unité de commande (10) étant prévue pour la commande ou la régulation du mouvement du moteur à courant continu (28), un point d'application des mâchoires de frein sur l'élément rotatif étant généralement dépassé lors du serrage ou du desserrage du frein de stationnement,
**caractérisé**
**en ce que** la première dérivée temporelle du courant électrique absorbé par le moteur à courant continu (28) lors du serrage est formée par l'unité de commande (10) pour déterminer le point d'application.

**2.** Procédé selon la revendication 1, **caractérisé en ce que** le point d'application est défini par l'unité de commande (10) comme le point de la position de mâchoire de frein où la dérivée temporelle du courant électrique absorbé par le moteur à courant continu (28) devient supérieure à zéro, cette valeur de la première dérivée n'étant identifiée de préférence comme point d'application que dans le cas où la dérivée du courant était négative auparavant.

**3.** Procédé selon la revendication 1 ou 2, **caractérisé par** les étapes suivantes :

- définir une valeur seuil de dérivée ($i_{p0}$) positive pour la première dérivée ($di/dt$),
- vérifier à des intervalles prédéterminés, de préférence réguliers, du mouvement de serrage du moteur à courant continu (28) si la première dérivée du courant ($di/dt$) absorbé par le moteur à courant continu (28) est supérieure ou identique à la valeur seuil de dérivée ($i_{p0}$),
- si la première dérivée est supérieure ou égale à la valeur seuil de dérivée ($i_{p0}$), retenir la position actuelle de la mâchoire de frein comme point d'application potentiel et démarrer un compteur ainsi qu'incrémenter le compteur lors du nouveau mouvement de serrage du moteur à courant continu (28) d'une valeur d'incrémentation définie auparavant, aussi longtemps que la première dérivée ($di/dt$) est supérieure ou égale à la valeur seuil de dérivée ($i_{p0}$), ou réinitialiser le compteur sur zéro, dès que la première dérivée ($di/dt$) passe à nouveau au-dessous de la valeur seuil de dérivée ($i_{p0}$) lors du nouveau mouvement de serrage du moteur à courant continu (28),
- vérifier si le compteur dépasse une valeur seuil de compteur ($n_{vorgabe}$) prédéfinie, et
- si le compteur dépasse la valeur seuil de compteur ($n_{vorgabe}$) prédéfinie, définir le point d'application potentiel retenu respectif comme point d'application réel.

**4.** Procédé selon l'une quelconque des revendications 1 à 3, **caractérisé en ce qu'**une valeur de courant maximale à absorber à cet effet par le moteur à courant continu (28) est déterminée par l'unité de commande (10) pour la commande ou la régulation du mouvement du moteur à courant continu (28) pour le serrage du frein de stationnement avec une force de serrage souhaitée et prédéfinie, le serrage est effectué par un mouvement correspondant du moteur à courant continu (28) et le mouvement du moteur à courant continu (28) est achevé après avoir atteint la valeur de courant maximale.

**5.** Procédé selon l'une quelconque des revendications 1 à 4, **caractérisé en ce que**, lors de la commande ou de la régulation du moteur à courant continu (28), une pression préliminaire hydraulique est prise en compte pour le serrage et/ou le desserrage du frein de stationnement par l'unité de commande (10), laquelle pression s'applique actuellement sur le piston en cas de serrage ou s'est appliquée sur le piston en cas de desserrage lors du serrage précédent.

6. Procédé selon l'une quelconque des revendications 1 à 5, **caractérisé en ce qu'**une course d'actionnement parcourue du moteur à courant continu (28) est déterminée de façon continue par l'unité de commande (10) lors du serrage et/ou du desserrage au moyen d'un modèle de moteur.

7. Procédé selon la revendication 6, **caractérisé en ce qu'**une position de piston, déterminée au moyen d'un modèle de moteur, est étalonnée par l'unité de commande (10) en tenant compte de la pression préliminaire hydraulique exercée sur le point d'application déterminé ou la position déterminée lorsque la valeur de courant maximale prédéfinie est atteinte.

8. Procédé selon l'une quelconque des revendications 6 à 7, **caractérisé en ce qu'**une course de serrage parcourue est déterminée par l'unité de commande (10) à partir de la course d'actionnement entre le point d'application déterminé et la position d'actionnement lorsque la valeur de courant maximale prédéfinie est atteinte et la course de serrage parcourue est comparée ensuite avec une course de serrage normale correspondant à la force de serrage souhaitée, une fonction de resserrage de l'unité de commande (10) étant activée dans le cas d'un écart significatif entre la course de serrage parcourue et la course de serrage normale.

9. Procédé selon la revendication 8, **caractérisé en ce que** la fonction de resserrage inclut une régulation de course, le resserrage étant effectué de préférence directement après la fin du processus de serrage.

10. Procédé selon la revendication 8, **caractérisé en ce qu'**une fonction "Knock" est utilisée par l'unité de commande (10) pour le resserrage, le resserrage étant effectué de préférence directement après la fin du processus de serrage.

11. Procédé selon l'une quelconque des revendications 1 à 10, **caractérisé en ce qu'**une commande du mouvement d'écrou dans le sens de desserrage est effectuée par l'unité de commande (10) pour le desserrage du frein de stationnement, le point d'application déterminé lors du dernier serrage avec la prise en compte de la pression préliminaire hydraulique et un jeu prédéterminé étant pris en compte lors du calcul de la course de déplacement théorique utilisée pour la commande du mouvement d'écrou.

12. Frein de stationnement comprenant un actionneur (5), l'actionneur (5) étant entraîné par un moteur à courant continu (28) pouvant fonctionner dans deux directions, lequel déplace par l'intermédiaire d'un engrenage (24) autobloquant de l'actionneur (5) au moins une mâchoire de frein pour le serrage ou le desserrage du frein de stationnement en approche ou en éloignement d'un élément rotatif, une unité de commande (10) étant prévue pour la commande ou la régulation du mouvement du moteur à courant continu, le frein de stationnement étant conçu de telle sorte que, lors du serrage ou du desserrage du frein de stationnement, un point d'application des mâchoires de frein sur l'élément rotatif est généralement dépassé,
**caractérisé**
**en ce que** l'unité de commande (10) détermine le point d'application par formation de la première dérivée temporelle du courant électrique absorbé lors du serrage par le moteur à courant continu (28).

13. Frein de stationnement selon la revendication 12, **caractérisé en ce que** l'unité de commande (10) détermine le point d'application comme étant le point de la position de la mâchoire de frein où la dérivée temporelle du courant électrique absorbé par le moteur à courant continu (28) est supérieure à zéro, cette valeur de la première dérivée ne pouvant être identifiée de préférence comme point d'application que dans le cas où la dérivée du courant était négative auparavant.

14. Frein de stationnement selon l'une quelconque des revendications 12 à 13, **caractérisé en ce que** l'unité de commande (10) détermine pour la commande ou la régulation du mouvement du moteur à courant continu (28) pour le serrage du frein de stationnement avec une force de serrage souhaitée et prédéfinie une valeur de courant maximale à absorber à cet effet par le moteur à courant continu (28), effectue le serrage par un mouvement correspondant du moteur à courant continu (28) et achève le mouvement du moteur à courant continu (28) après avoir atteint la valeur de courant maximale.

15. Frein de stationnement selon l'une quelconque des revendications 12 à 14, **caractérisé en ce que** l'unité de commande tient compte lors de la commande ou de la régulation du moteur à courant continu (28) pour le serrage et/ou le desserrage du frein de stationnement d'une pression préliminaire hydraulique, qui s'applique actuellement sur le piston en cas de serrage ou s'est appliquée sur le piston en cas de desserrage lors du serrage précédent.

**16.** Frein de stationnement selon l'une quelconque des revendications 12 à 15, **caractérisé en ce que** l'unité de commande (10) détermine en continu une course d'actionnement parcourue du moteur à courant continu (28) lors du serrage et/ou du desserrage au moyen d'un modèle de moteur.

**17.** Frein de stationnement selon la revendication 16, **caractérisé en ce que** l'unité de commande (10) étalonne une position de piston déterminée au moyen d'un modèle de moteur en tenant compte de la pression préliminaire hydraulique exercée sur le point d'application déterminé ou la position déterminée lorsque la valeur de courant maximale prédéfinie est atteinte.

**18.** Frein de stationnement selon l'une quelconque des revendications 16 à 17, **caractérisé en ce que** l'unité de commande (10) détermine une course de serrage parcourue à partir de la course d'actionnement entre le point d'application déterminé et la position d'actionnement lorsque la valeur de courant maximale prédéfinie est atteinte et compare ensuite la course de serrage parcourue avec une course de serrage normale correspondant à la force de serrage souhaitée, une fonction de resserrage de l'unité de commande (10) pouvant être activée dans le cas d'un écart significatif entre la course de serrage parcourue et la course de serrage normale.

**19.** Frein de stationnement selon la revendication 18, **caractérisé en ce que** la fonction de resserrage inclut une régulation de course, l'unité de commande (10) effectuant le resserrage de préférence directement après la fin du processus de serrage.

**20.** Frein de stationnement selon la revendication 18, **caractérisé en ce que** l'unité de commande (10) utilise pour le resserrage une fonction "Knock", l'unité de commande (10) effectuant le resserrage de préférence directement après la fin du processus de serrage.

**21.** Frein de stationnement selon l'une quelconque des revendications 11 à 17, **caractérisé en ce que** l'unité de commande (10) effectue pour le desserrage du frein de stationnement une commande du mouvement d'écrou dans le sens de desserrage, l'unité de commande (10) tenant compte, lors du calcul de la course de déplacement théorique utilisée pour la commande du mouvement d'écrou, du point d'application déterminé lors du dernier serrage compte tenu de la pression préliminaire hydraulique et d'un jeu prédéfini.

**Fig. 1**

**Fig. 2**

**Fig. 3**

Fig. 4

$$F_{caliper} = \begin{cases} f(x_{piston}) = c_{caliper} * x^2_{piston} & x_{piston} \geq 0 \\ 0 & x_{piston} < 0 \end{cases}$$

Fig. 5

**Fig. 6**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10261969 A1
- EP 0478642 B
- DE 10228115 B4